# EUROPEAN PATENT APPLICATION

(11) **EP 2 557 561 A2**
(43) Date of publication of application: **13.02.2013**
(21) Application number: 11765146.3
(22) Date of filing: 04.04.2011
(51) Int. Cl.: G09G 5/00

(54) **MOBILE INFORMATION DISPLAY TERMINAL**

(30) Priority: 05.04.2010 JP 2010087186
(71) Applicant: Funai Electric Co., Ltd., Daito-shi Osaka 574-0013 (JP)
(72) Inventor: MASAKI, Yasuo, Daito-shi Osaka 574-0013 (JP); KOHNO, Sei, Daito-shi Osaka 574-0013 (JP)
(74) Representative: Grünecker, Kinkeldey, Stockmair & Schwanhäusser
(86) International application number: PCT/IB2011/000946
(87) International publication number: WO 2011/124983

(57) **Abstract**

A portable information display terminal capable of displaying a screen in a suitable display orientation also in a case where the orientation of the user's face cannot be detected is provided. This portable information display terminal 1 includes a liquid crystal display portion 10 displaying information, a frame 20 provided with the liquid crystal display portion 10 on a surface thereof, an inclination sensor 53 to detect at least the use state of the frame 20 and the liquid crystal display portion 10 by sensing an inclination of the frame 20, a camera unit 11 capable of imaging the user's face, and a control portion 51 detecting the orientation of the face with a face detection function on the basis of data of the user's face imaged by the camera unit 11 and performing control of switching the orientation of a screen display of the liquid crystal display portion 10 on the basis of a result of detection of the orientation of the face and a result of detection by the inclination sensor 53.

## Description

### [Technical Field]

The present invention relates to a portable information display terminal, and more particularly, it relates to a portable information display terminal including a display portion and a housing provided with the display portion.

### [Background Art]

In general, a portable information display terminal including a display portion and a housing provided with the display portion is known (refer to Patent Document 1, for example).

In the aforementioned Patent Document 1, there is disclosed a portable telephone (portable information display terminal) including a display portion displaying a (television broadcast picture (screen display), a portable telephone body (housing) provided with the display portion on a surface thereof, and a camera (imaging portion) capable of imaging the user's face. This portable telephone according to Patent Document 1 is configured to image the user's face by the camera and display a television broadcast picture in a display direction corresponding to the orientation of the imaged user's face on the display portion when the user starts to watch the television broadcast picture on the display portion while grasping the portable telephone body.

### [Prior Art]

### [Patent Document]

[Patent Document 1] Japanese Patent Laying-Open No. 2009-130816

### [Summary of the Invention]

### [Problem to be Solved by the Invention]

In the portable telephone (portable information display terminal) according to the aforementioned Patent Document 1, however, the orientation of the user's face cannot be detected when the user's face cannot be imaged by the camera, such as when the user is absent in the imaging range of the camera. Therefore, in the aforementioned Patent Document 1, there is such a problem that the television broadcast picture (screen display) cannot be displayed in the suitable display direction corresponding to the orientation of the user's face on the display portion when the orientation of the user's face cannot be detected.

The present invention has been proposed in order to solve the aforementioned problem, and an object of the present invention is to provided a portable information display terminal capable of displaying a screen in a suitable display orientation also in a case where the orientation of the user's face cannot be detected.

### [Means for Solving the Problem and Effects of the Invention]

A portable information display terminal according to an aspect of the present invention includes a display portion displaying information, a housing provided with the display portion on a surface thereof, a state detection sensor to detect at least the use state of the housing and the display portion by sensing an inclination of the housing, an imaging portion capable of imaging the user's face, and a control portion detecting the orientation of the face with a face detection function on the basis of data of the user's face imaged by the imaging portion and performing control of switching the orientation of a screen display of the display portion on the basis of a result of detection of the orientation of the face and a result of detection by the state detection sensor.

In this portable information, display terminal according to the aspect, as hereinabove described, the orientation of the screen display of the display portion is switched on the basis of the result of detection of the orientation of the user's face detected with the face detection function and the result of detection by the state detection sensor, whereby which state (attitude) the housing is in can be detected by the state detection sensor sensing the inclination of the housing also in a case where the orientation of the user's face imaged by the imaging portion cannot be detected, dissimilarly to a case where the orientation of the screen display of the display portion is switched on the basis of only the result of detection of the orientation of the user's face detected with the face detection function. Thus, the screen can be displayed in a suitable display orientation on the basis of the state (attitude) detected by the state detection sensor also in the case where the orientation of the user's face imaged by the imaging portion cannot be detected.

Preferably in the aforementioned portable information display terminal according to the aspect, the control portion is configured to prioritize the result of detection of the orientation of the user's face over the use state detected by the state detection sensor and switch the orientation of the screen display to one corresponding to the orientation of the user's face in a case where the state detection sensor detects a prescribed use state. When configuring the portable information display terminal in this manner, the result of detection of the orientation of the user's face is prioritized in the case of the prescribed use state where the orientation of the screen display based on the result of detection of the orientation of the user's face and the orientation of the screen display based on the inclination detected by the state detection sensor easily differ from each other, so that the screen display can be displayed in an orientation more suitable to an actual use mode.

Preferably in the aforementioned portable information display terminal switching the orientation of the screen display to one corresponding to the orientation of the user's face in the case of detecting the prescribed use state, the prescribed use state is a use state where the user uses the portable information display terminal while grasping the housing with his/her hand, and the control portion is configured to prioritize the result of detection of the orientation of the user's face over the use state detected by the state detection sensor and switch the orientation of the screen display to one corresponding to the orientation of the user's face in a case where the use state where the user uses the portable information display terminal while grasping the housing with his/her hand is detected. When configuring the portable information display terminal in this manner, it is difficult to determine how the user sees the screen from the detection result based on the inclination detected by the state detection sensor in a case where the user uses the portable information display terminal while lying down in the state where the user grasps the housing with his/her hand so that the screen display can be displayed in an orientation more suitable to an actual use mode by detecting the orientation of the user's face and switching the orientation of the screen display to one corresponding to the orientation of the user's face in the case where the portable information display terminal is in the state where the user grasps the housing with his/her hand.

Preferably in this case, the control portion is configured to perform control of switching the orientation of the screen display of the display portion on the basis of the result of detection by the state detection sensor in a case where the state detection sensor detects that the portable information display terminal is not in the use state where the user uses the portable information display terminal while grasping the housing with his/her hand. In the case where the state detection sensor detects that the user does not grasp the housing with his/her hand as just described, the housing is conceivably fixedly placed on a placing surface or the like. In a case where the housing is fixedly placed on the placing surface or the like, the orientation of the display portion and the orientation of the user's face when the user sees the display portion satisfy a specific relationship, and the user's face can be detected less often than the case where the user uses the portable information display terminal while grasping the housing with his/her hand. Thus, in this case, the control of switching the orientation of the screen display of the display portion is performed with the result of detection by the state detection sensor without using the face detection function, whereby the screen can be displayed in a suitable display orientation.

Preferably in the aforementioned portable information display terminal switching the orientation of the screen display to one corresponding to the orientation of the user's face in the case of detecting the prescribed use state, the state detection sensor is provided to detect which use state of a first use state where the user uses the portable information display terminal while standing the housing and the display portion on the placing surface, a second use state where the user uses the portable information display terminal while laying down the housing and the display portion on the placing surface, and a third use state where the user uses the portable information display terminal while grasping the housing with his/her hand as the prescribed use state the portable information display terminal is in by sensing the inclination of the housing, and the control portion is configured to perform control of prioritizing the result of detection of the orientation of the user's face and switching the orientation of the screen display to one corresponding to the orientation of the user's face in a case where the state detection sensor detects that the portable information display terminal is at least in the third use state, and to perform control of switching the orientation of the screen display of the display portion on the basis of the result of detection by the state detection sensor in a case where the state detection sensor detects that the portable information display terminal is in the first use state or the second use state. When configuring the portable information display terminal in this manner, the screen can be displayed in a suitable display orientation by the state detection sensor in the case where the portable information display terminal is in the first use state or the second use state where the housing is placed on the placing surfaces Furthermore, the screen can be displayed in a suitable display orientation matching the orientation of the user's face on the basis of the result of detection of the orientation of the user's face in the case where the portable information display terminal is in the third use state where the user uses the portable information display terminal while grasping the housing with his/her hand.

Preferably in the aforementioned portable information display terminal switching the orientation of the screen display to one corresponding to the orientation of the user's face in the case of detecting the prescribed use state, the state detection sensor is configured to detect at least an unused state turning down the portable information display terminal so that the display portion is opposed to the placing surface in addition to the prescribed use state, and the control portion is configured to perform control of shifting to a standby mode without using the face detection function in a case where the state detection sensor detects that the portable information display terminal is not in the prescribed use state where the housing is grasped by the user and detects an inclination of the housing in the unused state turning down the portable information display terminal so that the display portion is opposed to the placing surface, and to perform control of not shifting to the standby mode but displaying a screen display based on the result of detection of the orientation of the user's face on the display portion in a case where the state detection sensor detects that the portable information display terminal is in the prescribed use state where the housing is grasped by the user and detects the inclination of the housing in the unused state turning down the portable information display terminal so that the display portion is opposed to the placing surface. When configuring the portable information display terminal in this manner, it is considered that the user does not use the portable information display terminal in the case where the state detection sensor detects that the portable information display terminal is not in the prescribed use state where the housing is grasped by the user and detects the inclination of the housing in the unused state turning down the portable information display terminal so that the display portion is opposed to the placing surface. Thus, in this case, the portable information display terminal shifts to the standby mode so that power consumption of the portable information display terminal can be reduced. On the other hand, it is considered that the user uses the portable information display terminal (sees the display portion while lying on his/her back, for example) in the case where the state detection sensor detects that the housing is grasped by the user even when detecting the inclination of the housing in the unused state turning down the portable information display terminal so that the display portion is opposed to the placing surface, and hence in this case, the screen can be displayed in a suitable display orientation matching the orientation of the user's face on the basis of the result of detection of the orientation of the user's face.

Preferably in the aforementioned portable information display terminal switching the orientation of the screen display to one corresponding to the orientation of the user's face in the case of detecting the prescribed use state, the state detection sensor is provided to detect which use state of a first use state where the user uses the portable information display terminal while standing at least the housing and the display portion on the placing surface, a second use state where the user uses the portable information display terminal while laying down the housing and the display portion on the placing surface, and a third use state where the user uses the portable information display terminal while grasping the housing with his/her hand as the prescribed use state the portable information display terminal is in by sensing the inclination of the housing, and the housing is configured to have an outer shape settable on the placing surface so that a first inclination of the housing in the first use state and a second inclination of the housing in the second use state become inclinations different from each other. When configuring the portable information display terminal in this manner, the housing can be set on the placing surface at different inclinations in the first use state and the second use state on the basis of the outer shape of the housing. Thus, the first use state and the second use state can be easily determined and specified on the basis of the result of detection by the state detection sensor, and the screen can be displayed in a suitable display orientation corresponding to the first use state or the second use state.

Preferably in the aforementioned portable information display terminal according to the aspect, the control portion is configured to maintain the orientation of the screen display of the display portion unswitched if determining that an inclination value detected this time by the state detection sensor falls within a prescribed angular range from an inclination value previously detected by the state detection sensor in a case where the orientation of the user's face cannot be detected from the data of the user's face imaged by the imaging portion when the state detection sensor detects the use state where the user uses the portable information display terminal while grasping the housing with his/her hand. When configuring the portable information display terminal in this manner, the inclination value detected this time by the state detection sensor has not been significantly changed from the inclination value previously detected by the state detection sensor in the case where the inclination value detected this time by the state detection sensor falls within the prescribed angular range from the inclination value previously detected by the state detection sensor in the state where the user grasps the housing, and hence it is considered that a relative positional relationship between the user and the portable information display terminal has not been significantly changed. In this case, the orientation of the screen display of the display portion is not switched but maintained, whereby the screen can be displayed in a suitable display orientation matching the orientation of the user's face.

Preferably in this case, the control portion is configured to detect the orientation of the user's face again with the face detection function if it is detected that the inclination value detected this time by the state detection sensor has been changed over the prescribed angular range from the inclination value previously detected by the state detection sensor in the case where the orientation of the user's face cannot be detected from the data of the user's face imaged by the imaging portion. When configuring the portable information display terminal in this manner, the inclination value detected this time by the state detection sensor has been significantly changed from the inclination value previously detected by the state detection sensor in the case where the inclination value detected this time by the state detection sensor has been changed over the prescribed angular range from the inclination value previously detected by the state detection sensor in the state where the user grasps the housing, and hence it is considered that the relative positional relationship between the user and the portable information display terminal has been significantly changed or the way the user holds the housing has been changed. In this case, the orientation of the user's face is detected again with the face detection function, whereby the screen can be displayed in a suitable display orientation matching the orientation of the user's face on the basis of a result of detection of the redetected orientation of the user's face.

Preferably in the aforementioned portable information display terminal according to the aspect, the state detection sensor includes an inclination sensor. When configuring the portable information display terminal in this manner, the inclination of the housing can be easily detected by the inclination sensor.

### [Brief Description of the Drawings]

[Fig. 1] An overall perspective view for illustrating the structure on a liquid crystal display portion side of a portable information display terminal according to an embodiment of the present invention.
[Fig. 2] An overall perspective view for illustrating the structure on a surface side of a frame of the portable information display terminal shown in Fig. 1 opposite to a surface provided with a liquid crystal display portion.
[Fig. 3] A perspective view showing a state where the portable information display terminal is grasped while laterally orienting the longitudinal direction of the portable information display terminal shown in Fig. 1.
[Fig. 4] A perspective view showing a state where the portable information display terminal is grasped while vertically orienting the longitudinal direction of the portable information display terminal shown in Fig. 1.
[Fig. 5] A perspective view showing a state standing the frame and the liquid crystal display portion of the portable information display terminal shown in Fig. 1 on a placing surface.
[Fig. 6] A perspective view showing a state laying down the frame and the liquid crystal display portion of the portable information display terminal shown in Fig. 1 on the placing surface.
[Fig. 7] A block diagram for illustrating the internal structure of the portable information display terminal shown in Fig. 1.
[Fig. 8] A perspective view showing an unused state where the frame and the liquid crystal display portion of the portable information display terminal shown in Fig. 1 are turned down with respect to the placing surface.
[Fig. 9] A perspective view showing a state where the short-side direction of the liquid crystal display portion of the portable information display terminal shown in Fig. 1 and the vertical direction of the user's face substantially coincide with each other.
[Fig. 10] A diagram showing a state where the orientation of the user's face is inclined between about -45° and about +45° with respect to the short-side direction of the liquid crystal display portion of the portable information display terminal shown in Fig. 1.
[Fig. 11] A perspective view showing a state where the longitudinal direction of the liquid crystal display portion of the portable information display terminal shown in Fig. 1 and the vertical direction of the user's face substantially coincide with each other.
[Fig. 12] A diagram showing a state where the orientation of the user's face is inclined between about -45° and about +45° with respect to the longitudinal direction of the liquid crystal display portion of the portable information display terminal shown in Fig. 1.
[Fig. 13] A flow chart for illustrating a flow for change and maintenance of a display orientation corresponding to the state (state other than the hand-held state) of the portable information display terminal shown in Fig. 1.
[Fig. 14] A flow chart for illustrating a flow for change and maintenance of a display orientation corresponding to the state (hand-held state) of the portable information display terminal shown in Fig. 1.

### [Modes for Carrying Out the Invention]

An embodiment embodying the present invention is now described on the basis of the drawings.

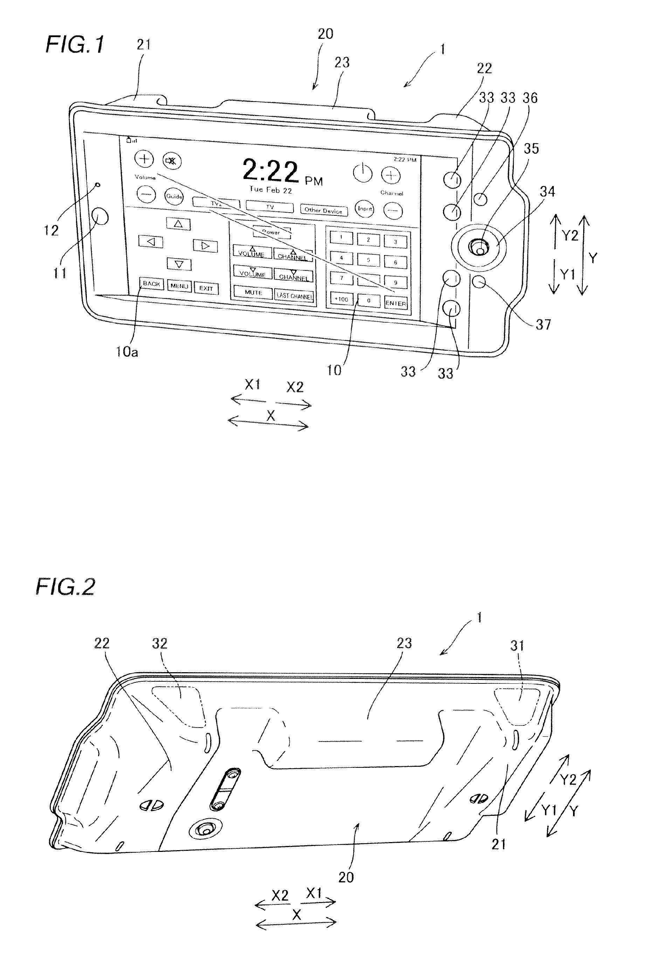

First, the structure of a portable information display terminal 1 according to the embodiment of the present invention is described with reference to Figs. 1 to 12.

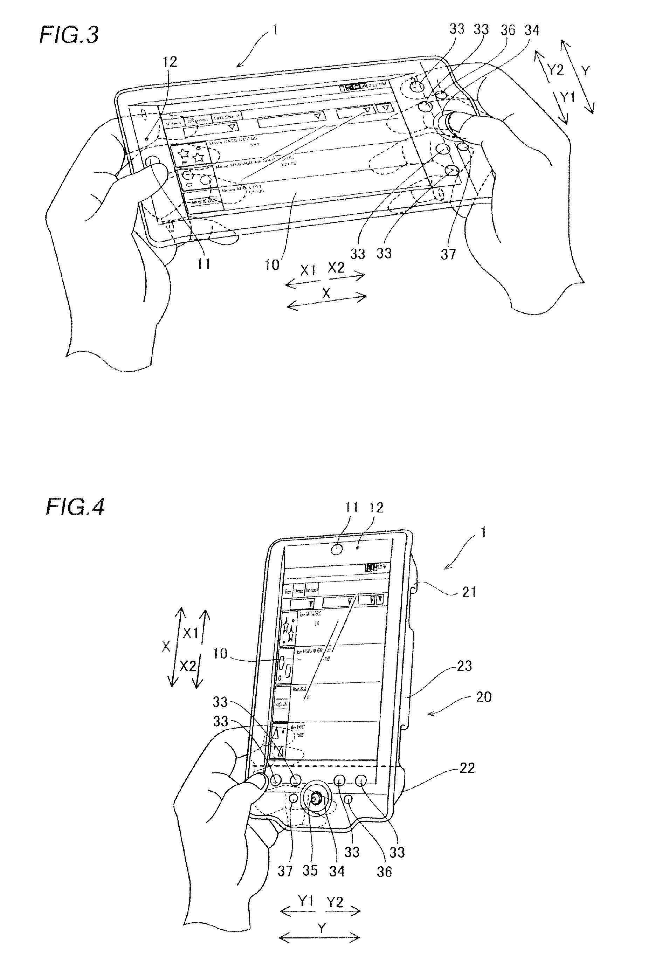

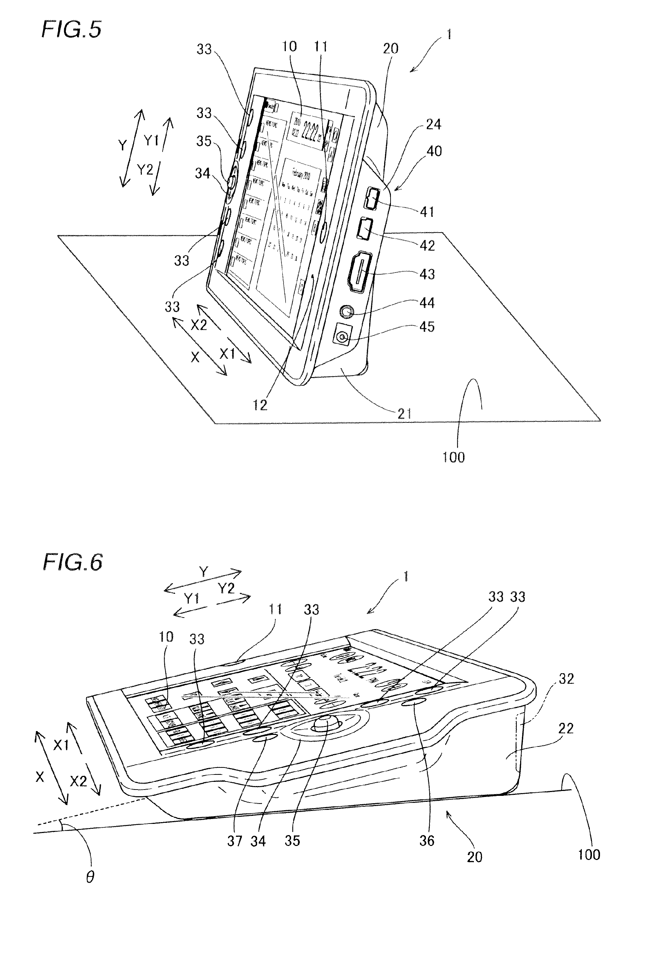

As shown in Figs. 1 and 2, the portable information display terminal 1 according to the embodiment of the present invention is mainly constituted by a liquid crystal display portion 10 (see Fig. 1) displaying information and a frame 20 provided with the liquid crystal display portion 10 on a surface thereof. The liquid crystal display portion 10 is an example of the "display portion" in the present invention, and the frame 20 is an example of the "housing" in the present invention. This portable information display terminal 1 is configured to be usable in a state (see Figs. 3 and 4) grasped by the user, and to be usable also in a state (see Fig. 5) standing the frame 20 and the liquid crystal display portion 10 on a placing surface 100 and a state (see Fig. 6) laying down the frame 20 and the liquid crystal display portion 10 on the placing surface 100. The state grasped by the user is an example of the "prescribed use state" or the "third use state" in the present invention, and the state standing the frame 20 and the liquid crystal display portion 10 on the placing surface 100 is an example of the "first use state" in the present invention. The state laying down the frame 20 and the liquid crystal display portion 10 on the placing surface 100 is an example of the "second use state" in the present invention.

This portable information display terminal 1 is configured to be Internet-connectable, and configured to be capable of using a function of receiving and playing back/outputting streaming distributions an electronic mail function, a video chat function, and a voice chat function by performing Internet connection. Furthermore, the portable information display terminal 1 is configured to be usable as a remote control for a media player, a television set (not shown), etc. by shifting to a remote control mode also in a case where the same is not Internet-connected. The portable information display terminal 1 is capable of displaying a calendar, a clock, etc. by small-scale application software (gadget) in the state (see Fig. 5) standing the frame 20 and the liquid crystal display portion 10.

The structures of the liquid crystal display portion 10 and the frame 20 of the portable information display terminal 1 are now described in detail. The liquid crystal display portion 10 has a touch panel function, as shown in Fig. 1, and is so configured that the user presses down operation buttons 10a displayed on the liquid crystal display portion 10 to be capable of operations according to application programs. A camera unit 11 is set on an arrow X1 direction side of the liquid crystal display portion 10. This camera unit 11 has a function of imaging the user's face in a case where the user uses the portable information display terminal 1 in a state grasped by the user, for example. The camera unit 11 is an example of the "imaging portion" in the present invention.

A microphone unit 12 is set in the vicinity of the camera unit 11. This microphone unit 12 has a function of inputting sounds in the voice chat, the video chat, etc., for example.

The frame 20 is made of resin. As shown in Figs. 1 and 2, a plurality of protrusions 21, 22, and 23 are integrally provided on a surface of the frame 20 opposite to the surface provided with the liquid crystal display portion 10. The protrusions 21 and 22 are provided in the vicinity of both end portions in the longitudinal direction (direction X) of the frame 20 to extend in the short-side direction (direction Y) of the frame 20. As shown in Fig. 6, the protrusions 21 (see Fig. 2) and 22 are so configured that the thicknesses gradually increase from a first end side (arrow Y1 direction side) toward a second end side (arrow Y2 direction side) in the short-side direction (direction Y) of the frame 20. In other words, the protrusions 21 and 22 are configured to have wedge shapes tapering in a tapering manner from the second side (arrow Y2 direction side) toward the first side (arrow Y1 direction side) in the short-side direction of the frame 20, as viewed from the longitudinal direction (the arrow X1 direction and the arrow X2 direction) of the frame 20.

The protrusions 21 and 22 are so configured in the aforementioned manner that the user places the portable information display terminal 1 on the placing surface 100 while directing surfaces of the protrusion 21 and the protrusion 22 on the arrow Y2 direction sides downward, whereby the protrusions 21 and 22 are capable of supporting the frame 20 in a state standing the frame 20 and the liquid crystal display portion 10, as shown in Fig. 5. Furthermore, the protrusions 21 (see Fig. 2) and 22 are capable of supporting the frame 20 in a state inclining the frame 20 and the liquid crystal display portion 10 by a prescribed angle θ and laying down the same with respect to the placing surface 100, as shown in Fig. 6.

In addition, the protrusions 21 and 22 are so configured in the aforementioned manner that the user can grasp the protrusions 21 and 22 with both hands while laterally orienting the longitudinal direction (direction X) of the frame 20 and the liquid crystal display portion 10 as viewed from the user, as shown in Fig. 3. As shown in Fig. 4, the protrusion 22 is graspable with one hand (left hand) while vertically orienting the longitudinal direction (direction X) of the frame 20 and the liquid crystal display portion 10.

The protrusion 23 is provided in the vicinity of a second end portion (arrow Y2 direction end portion) in the short-side direction (direction Y) of the frame 20 between the protrusions 21 and 22, as shown in Fig. 2. A secondary cell lithium ion cell) to supply power to the portable information display terminal 1 is built (stored) in this protrusion 23.

Infrared communication portions 31 and 32 are built in end surfaces of the protrusions 21 and 22 on second end portion sides (arrow Y2 direction sides), respectively. These infrared communication portions 31 and 32 are configured to emit infrared rays including prescribed signals (remote control signals) capable of operating the media player, the television set (not shown), etc. in a remote control mode described later.

Various types of information processor mode switches 33 are provided on portions on an arrow X2 direction side in the longitudinal direction (direction X) of the liquid crystal display portion 10, as shown in Fig. 1. The various types of information processor mode switches 33 are switches used in an information processor mode processing an electronic mail, video, voice chats, and the like, respectively. A four-directional movable switch 34 (selection switch) is provided in the vicinity of the various types of information processor mode switches 33 on the arrow X2 direction side. A decision switch 35 is provided on a central portion of the four-directional movable switch 34. The four-directional movable switch 34 and the decision switch 35 each are configured to be usable in both of the remote control mode and the information processor mode.

A remote control mode transition switch 36 capable of switching the remote control mode and the information processor mode is provided on the arrow Y2 direction side of the four-directional movable switch 34. A return function switch 37 to return an operation screen OSD-displayed on a display portion of a remote control operation object apparatus (television or the like) in the remote control mode from the current state to an immediately precedent state is provided on the arrow Y1 direction side of the four-directional movable switch 34.

As shown in Fig. 5, a plurality of connection portions 40 are provided on a side surface portion 24 on the arrow X1 direction side of the frame 20. These connection portions 40 include two USB connection portions 41 and 42, an HDMI connection portion 43, a voice cable connection portion 44, and a power supply connector 45.

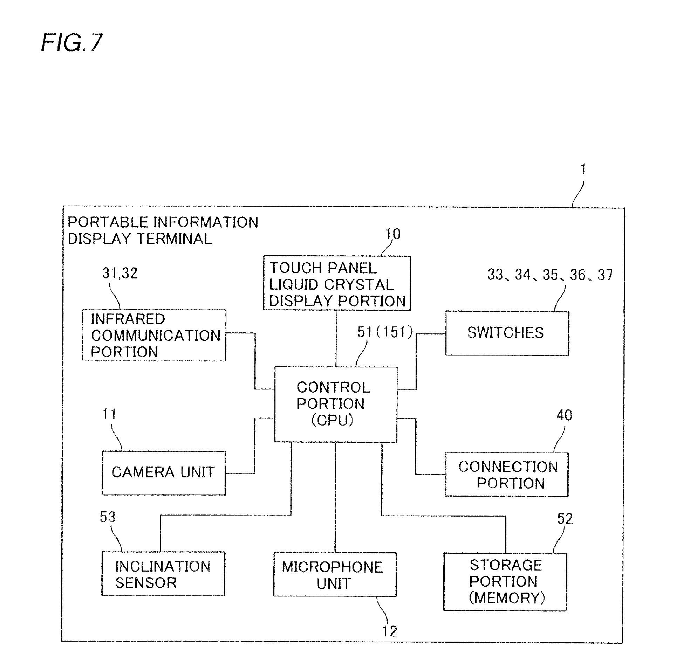

The internal structure of the portable information display terminal 1 is now described. The frame 20 of the portable information display terminal 1 is provided with a control portion (CPU) 51 managing control of the portable information display terminal 1, a storage portion (memory) 52, and an inclination sensor 53, as shown in Fig. 7. The storage portion 52 stores application programs executed by the control portion 51. The inclination sensor 53 is an example of the "state detection sensor" in the present invention.

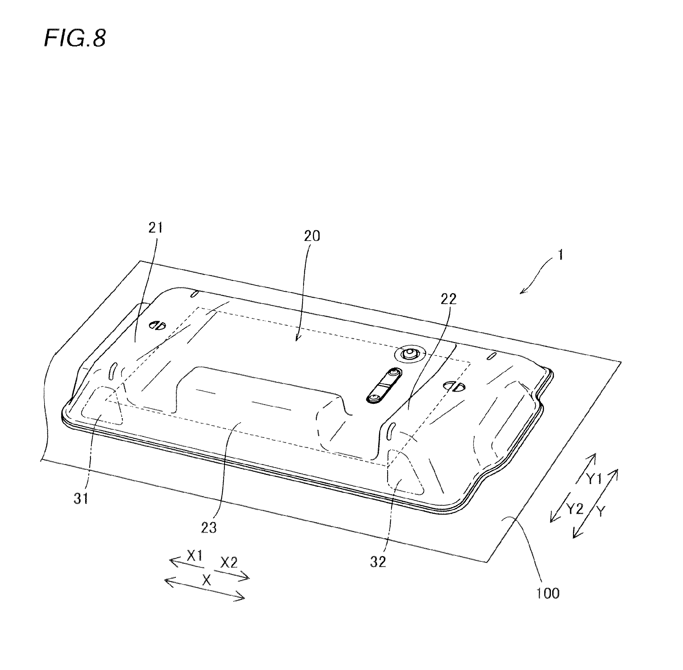

According to this embodiment, the inclination sensor 53 has a function of acquiring an inclination of the frame 20 (see Fig. 1). The inclination sensor 53 is provided to detect which use state the portable information display terminal 1 is in, i.e. in a state (hereinafter referred to as a stood state (see Fig. 5)) where the user uses the portable information display terminal 1 while standing the frame 20 and the liquid crystal display portion 10 on the placing surface 100, in a state (hereinafter referred to as a laid-down state (see Fig. 6)) where the user uses the portable information display terminal 1 while laying down the frame 20 and the liquid crystal display portion 10 on the placing surface 100, or in a state (hereinafter referred to as a hand-held state (see Figs. 3 and 4)) where the user uses the portable information display terminal 1 while grasping the frame 20 with his/her hand. The inclination sensor 53 is configured to be capable of detecting not only the stood state (see Fig. 5), the laid-down state (see Fig. 6), and the hand-held state (see Figs. 3 and 4) but also an unused state (see Fig. 8) turning down the portable information display terminal 1 so that the frame 20 and the liquid crystal display portion 10 are opposed to the placing surface 100.

As to an inclination in the stood state (see Fig. 5), an inclination in the laid-down state (see Fig. 6), and an inclination in the turned-down unused state (see Fig. 8), angles of the frame 20 with respect to the placing surface 100 are different from each other by at least 90 degrees due to the aforementioned outer shape of the frame 20, and hence the control portion 51 is capable of easily detecting and specifying the respective states on the basis of the different inclinations of the frame 20 with respect to the placing surface 100. The inclination in the state where the user uses the portable information display terminal 1 while standing the frame 20 and the liquid crystal display portion 10 on the placing surface 100 is an example of the "first inclination" in the present invention, and the inclination in the state where the user uses the portable information display terminal 1 while laying down the frame 20 and the liquid crystal display portion 10 on the placing surface 100 is an example of the "second inclination" in the present invention.

In the hand-held state (see Figs. 3 and 4), a detection value detected by the inclination sensor 53 changes every detection time due to the fact that the user finely moves, and hence the control portion 51 is enabled to distinguish the stood state, the laid-down state, and the unused state from the hand-held state. Furthermore, the inclination sensor 53 is configured to be capable of detecting a vertically oriented use state (hereinafter referred to as a vertically held state (see Fig. 4)) where the user uses the portable information display terminal 1 while vertically orienting the longitudinal direction of the frame 20 and a laterally oriented use state (hereinafter referred to a laterally held state (see Fig. 3)) where the user uses the portable information display terminal 1 while laterally orienting the longitudinal direction of the frame 20 also in a case where the portable information display terminal 1 is in the hand-held state (see Figs. 3 and 4). In the vertically held state and the laterally held state, the liquid crystal display portion 10 is rotated by about 90 degrees as shown in Figs. 3 and 4, whereby the inclination sensor 53 is capable of easily determining and specifying different inclinations in the vertically held state and the laterally held state.

According to this embodiment, the control portion 51 is configured to determine and specify the use state or the unused state of the frame 20 and the liquid crystal display portion 10 on the basis of a result of detection of the use state or the unused state of the frame 20 and the liquid crystal display portion 10 by the inclination sensor 53 and a result of detection of the orientation of the user's face detected by the face detection function of the camera unit 11. Furthermore, the control portion 51 is configured to perform control of switching the orientation of the screen display of the liquid crystal display portion 10 on the basis of the aforementioned result of detection by the inclination sensor 53 and the aforementioned result of detection of the orientation of the user's face.

More specifically, the control portion 51 is configured to determine and specify which state the portable information display terminal 1 is in, i.e. in the stood state (see Fig. 5), in the laid-down state (see Fig. 6), in the hand-held state (see Figs. 3 and 4), or in the unused state (see Fig. 8) on the basis of the result of detection by the inclination sensor 53 when the user changes the attitude (state) of the portable information display terminal 1. Furthermore, the control portion 51 is configured to switch the orientation of the screen display of the liquid crystal display portion 10 to correspond to the stood state (see Fig. 5) or the laid-down state (see Fig. 6) on the basis of the result of detection by the inclination sensor 53 in a case of determining and specifying that the portable information display terminal 1 is in the stood state (see Fig. 5) or in the laid-down state (see Fig. 6) on the basis of the result of detection by the inclination sensor 53. In other words, the control portion 51 is configured to perform control of switching the orientation of the screen display of the liquid crystal display portion 10 on the basis of the result of detection by the inclination sensor 53 in a case where the inclination sensor 53 detects that the portable information display terminal 1 is not in the hand-held state, when the user changes the attitude (state) of the portable information display terminal 1.

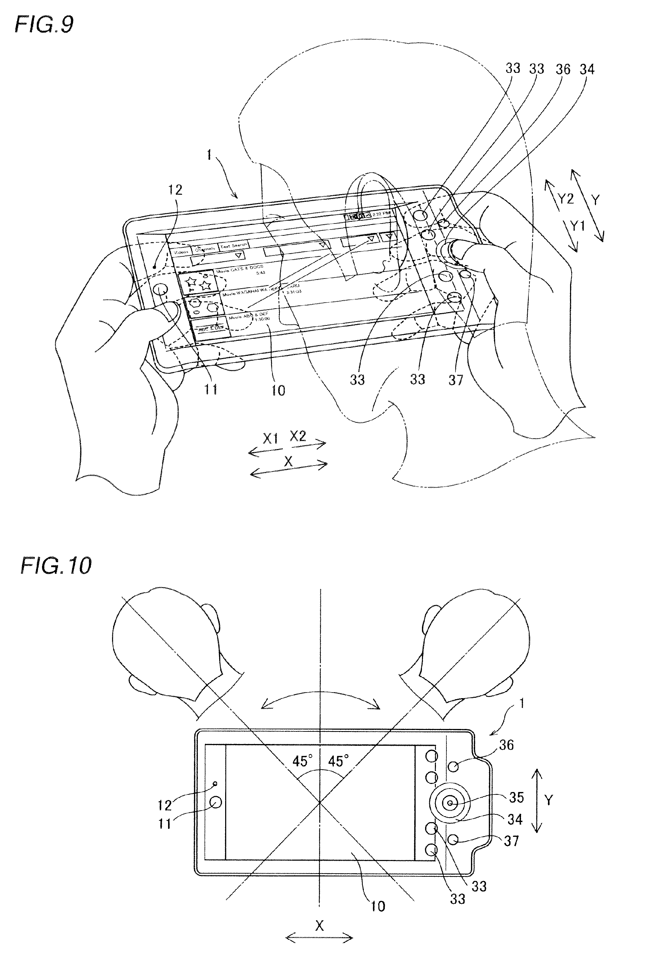

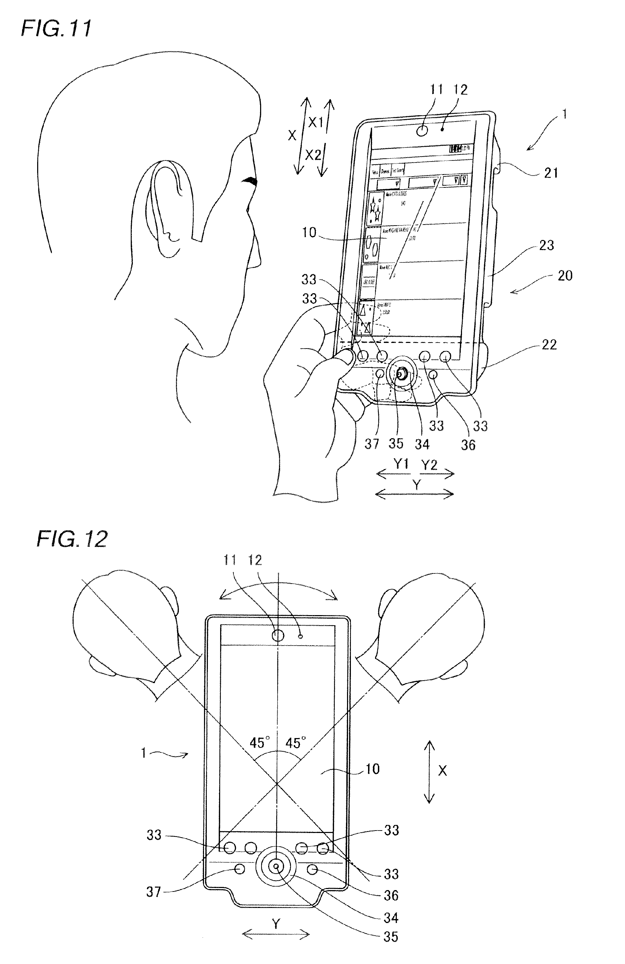

In addition, the control portion 51 is configured to prioritize the result of detection of the orientation of the user's face over the hand-held state detected by the inclination sensor 53 and switch the orientation of the screen display to one corresponding to the orientation of the user's face in a case of determining and specifying that the portable information display terminal 1 is in the hand-held state (see Figs. 3 and 4) on the basis of the result of detection by the inclination sensor 53. More specifically, the control portion 51 has a function of detecting the orientation of the user's face imaged by the camera unit 11 with the face detection function, and is configured to display the screen display, setting the short-side direction (direction Y) of the liquid crystal display portion 10 as the vertical direction in a case of determining that the vertical direction of the user's face is an orientation substantially coinciding with the short-side direction (direction Y) of the liquid crystal display portion 10, as shown in Figs. 9 and 10. The control portion 51 is configured to display the screen display, setting the short-side direction (direction Y) of the liquid crystal display portion 10 as the vertical direction in a case where the orientation of the user's face is inclined between about -45° and about +45° (see Fig. 10) with respect to the short-side direction (direction Y) of the liquid crystal display portion 10 in this case. Furthermore, the control portion 51 is configured to display the screen display, setting the short-side direction (direction X) of the liquid crystal display portion 10 as the vertical direction in a case of determining that the vertical direction of the user's face is an orientation substantially coinciding with the short-side direction (direction X) of the liquid crystal display portion 10, as shown in Figs. 11 and 12. In addition, the control portion 51 is configured to display the screen display, setting the longitudinal direction (direction X) of the liquid crystal display portion 10 as the vertical direction in a case where the orientation of the user's face is inclined between about -45° and about +45° (see Fig. 12) with respect to the longitudinal direction (direction X) of the liquid crystal display portion 10.

The control portion 51 is configured to perform control of automatically starting an application program corresponding to the specified use state or shifting to a standby mode. More specifically, the control portion 51 is configured to start an application program not premised to be operated by the user in a case of specifying that the portable information display terminal 1 is in the stood state (see Fig. 5). In addition, the control portion 51 is configured to start an application program premised to be operated by the user in a case of specifying that the portable information display terminal 1 is in the laid-down state (see Fig. 6). Furthermore, the control portion 51 is configured to start the application program premised to be operated by the user also in a case of specifying that the portable information display terminal 1 is in the hand-held state (see Figs. 3 and 4). The application program corresponding to the specified use state is preset by the user.

The control portion 51 is configured to determine which state the portable information display terminal 1 is in, i.e. in the state (state of Figs. 5, 6, and 8) placed on the placing surface 100 or in the state (state of Figs. 3 and 4) grasped by the user by determining whether or not the inclination value detected by the inclination sensor 53 regularly changes piecemeal. The control portion 51 is configured to determine that the portable information display terminal 1 is in the state grasped by the user in the case where the inclination value detected by the inclination sensor 53 regularly changes piecemeal. Furthermore, the control portion 51 is configured to determine that the portable information display terminal 1 is in the state placed on the placing surface 100 in a case where the inclination value detected by the inclination sensor 53 is stable.

According to this embodiment, the control portion 51 is configured to perform control of shifting to the standby mode in a case of specifying that the portable information display terminal 1 is in the unused state (see Fig. 8) turning down the portable information display terminal 1 so that the frame 20 and the liquid crystal display portion 10 are opposed to the placing surface 100 with the inclination sensor 53. The control portion 51 is configured not to start any application program used by the user in this case, dissimilarly to the time of the use state (the stood state, the laid-down state, or the hand-held state).

According to this embodiment, the control portion 51 is configured not to shift to the standby mode even if an inclination value similar to that in the unused state (see Fig. 8) is detected in a case where an inclination value in the hand-held state is detected by the inclination sensor 53. The control portion 51 is configured to perform control of displaying a screen display based on the result of detection of the orientation of the user's face on the liquid crystal display portion 10 in this case. In other words, the control portion 51 is configured to perform control of suppressing the shift to the standby mode in whatever state the frame 20 is in when the user grasps the frame 20.

Next, a flow for change and maintenance of a display orientation corresponding to the state of the portable information display terminal 1 According to this embodiment is described with reference to Figs. 3 to 8, 13, and 14.

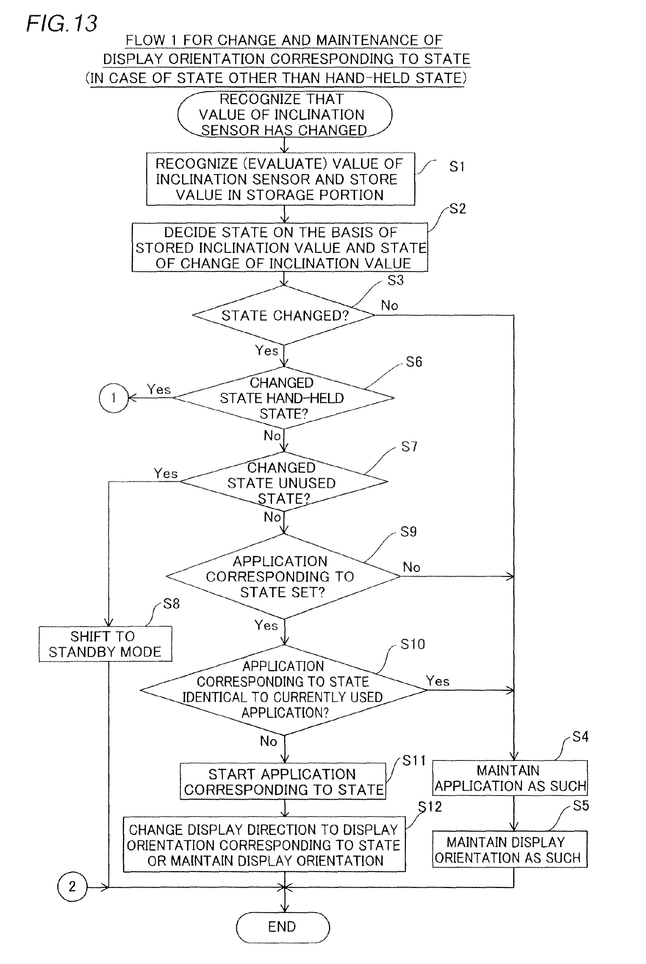

As shown in Fig. 13, the control portion 51 recognizes that the inclination value acquired by the inclination sensor 53 has changed (event occurrence), whereby the starting flow for the application program corresponding to the use state of the portable information display terminal 1 is started. First, the inclination value acquired from the inclination sensor 53 is recognized (evaluated) by the control portion 51 (see Fig. 7), and the inclination value is stored in the storage portion 52 at a step S1. At a step S2, which state of the stood state (see Fig. 5), the laid-down state (see Fig. 6), the unused state (see Fig. 8), and the hand-held state (see Figs. 3 and 4) the portable information display terminal 1 is in is determined on the basis of states of change of a stored past inclination value and the inclination value stored this time. In other words, the portable information display terminal 1 is decided to be in the hand-held state in a case where the stored past inclination value and the inclination value stored this time change piecemeal. Furthermore, the portable information display terminal 1 is decided to be in the stood state in a case where the stored past inclination value and the inclination value stored this time do not change piecemeal but the inclination value stored this time is in the range of the inclination value in the stood state, the portable information display terminal 1 is decided to be in the laid-down state in a case where the inclination value stored this time is in the range of the inclination value in the laid-down state, and the portable information display terminal 1 is decided to be in the unused state in a case where the inclination value stored this time is in the range of the inclination value in the turned-down unused state.

Thereafter, whether or not the decided state has been changed from a state (before event occurrence) before the inclination value acquired by the inclination sensor 53 changes is determined by the control portion 51 at a step S3. In a case where it is determined at the step S3 that the decided state has not been changed from the state (before event occurrence) before the inclination value acquired by the inclination sensor 53 changes, the control portion 51 advances to a step 54. The state has not been changed, and hence the application program is not changed but the application program is maintained as such at the step S4, and the control portion 51 advances to a step S5. The display orientation displayed on the liquid crystal display portion 10 is not changed either but maintained as such at the step S5, and the flow for change and maintenance of a display orientation corresponding to the state of the portable information display terminal 1 terminates.

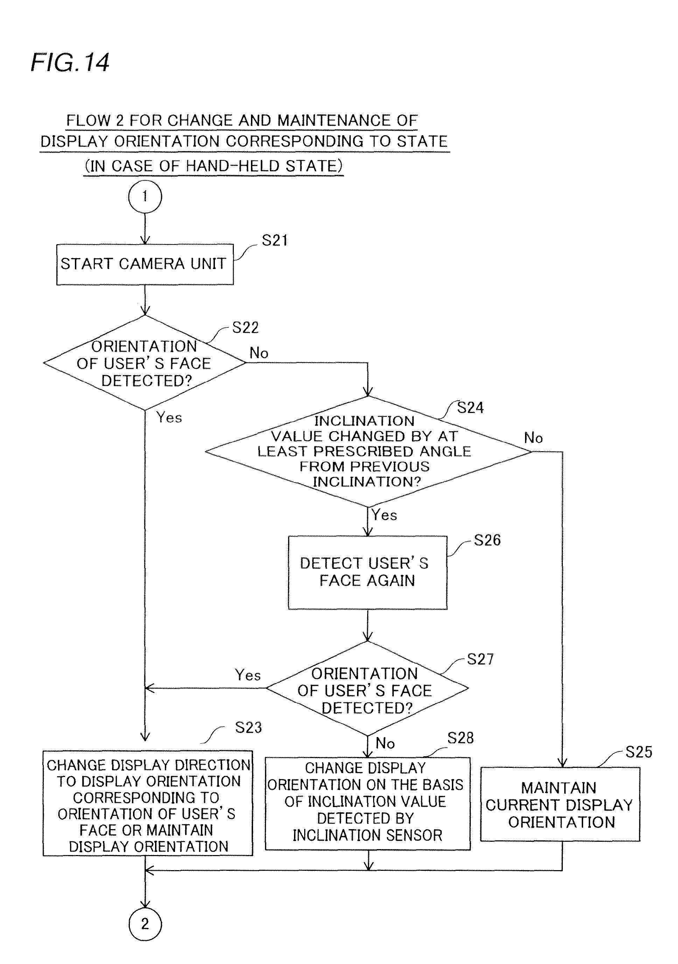

In a case where it is determined at the step S3 that the decided state has been changed from the state (before event occurrence) before the inclination value acquired by the inclination sensor 53 changes, the control portion 51 advances to a step S6. At the step S6, whether or not the changed state is the state (hand-held state (see Figs. 3 and 4)) where the user uses the portable information display terminal 1 while grasping the frame 20 with his/her hand is determined by the control portion 51. In a case where it is determined at the step S6 that the changed state is the hand-held state, the control portion 51 advances to a step S21 (see Fig. 14) described later. In a case where it is determined at the step S6 that the changed state is not the hand-held state, the control portion 51 advances to a step S7.

At the step S7, whether or not the changed state is the unused state (see Fig. 8) turning down the portable information display terminal 1 so that the frame 20 and the liquid crystal display portion 10 are opposed to the placing surface 100 is determined by the control portion 51. In a case where it is determined at the step S7 that the changed state is the unused state, the control portion 51 advances to a step S8. At the step S8, the portable information display terminal 1 is shifted to the standby mode by the control portion 51, and the flow for change and maintenance of a display orientation corresponding to the state of the portable information display terminal 1 terminates. In a case where it is determined at the step S7 that the changed state is not the unused state, the control portion 51 advances to a step S9.

Thereafter, whether or not an application program corresponding to the changed state is set is determined by the control portion 51 at the step S9. In other words, whether or not an application program to be automatically started as to each of the stood state, the laid-down state, and the hand-held state is set by the user is determined at the step S9. In a case where it is determined at the step S9 that the application program corresponding to the changed state has not been set, the control portion 51 advances to the aforementioned step S4 and step S5, and the flow for change and maintenance of a display orientation corresponding to the state of the portable information display terminal 1 terminates. In a case where it is determined at the step S9 that the application program corresponding to the changed state has been set, the control portion 51 advances to a step S10.

At the step S10, whether or not the application program having been set is the same application program as a currently used application program is determined by the control portion 51. In a case where it is determined at the step S10 that the application program having been set is the same application program as the currently used application program, the application program may not be changed, and hence the control portion 51 advances to the aforementioned step S4 and step S5, and the flow for change and maintenance of a display orientation corresponding to the state of the portable information display terminal 1 terminates. In a case where it is determined at the step S10 that the application program having been set is not the same application program as the currently used application program, the control portion 51 advances to a step S11.

Thereafter, the application program, set by the user, corresponding to the changed state is started at the step S11, and the control portion 51 advances to a step S12. At the step S12, the display direction is changed to a display orientation corresponding to the state or the display orientation corresponding to the state is maintained, and the flow for change and maintenance of a display orientation corresponding to the state of the portable information display terminal 1 terminates. In a case where the state is changed from the laid-down state or the laterally held state of the hand-held state to the stood state, for example, the display orientation displayed on the liquid crystal display portion 10 is rotated by 180 degrees and changed. In a case where the state is changed from the vertically held state of the hand-held state or the stood state to the laid-down state, the display orientation displayed on the liquid crystal display portion 10 is rotated by 90 degrees or 270 degrees and changed. In a case where the state is changed from the laterally held state of the hand-held state to the laid-down state, the display orientation displayed on the liquid crystal display portion 10 is not changed but maintained as such.

The case where it is determined by the control portion 51 at the step S6 that the changed state is the hand-held state is now described in detail with reference to Fig. 14.

As shown in Fig. 14, in the case where it is determined at the step S6 (see Fig. 13) that the changed state is the hand-held state, the camera unit 11 is started by the control portion 51 at the step S21, and the control portion 51 advances to a step S22.

Thereafter, whether or not the orientation of the user's face has been able to be detected is determined by the control portion 51 on the basis of data imaged by the camera unit 11 at the step S22. In a case where it is determined at the step S22 that the orientation of the user's face has been able to be detected, the control portion 51 advances to a step S23. At the step S23, the direction of the screen display displayed on the liquid crystal display portion 10 is changed to a display direction corresponding to the orientation of the user's face or maintained by the control portion 51, and the flow for change and maintenance of a display orientation corresponding to the state of the portable information display terminal 1 terminates. In a case where the state is changed from the stood state to the laterally held state of the hand-held state, for example, the display orientation displayed on the liquid crystal display portion 10 is rotated by 180 degrees. In a case where the state is changed from the stood state, the laid-down state, or the laterally held state of the hand-held state to the vertically held state of the hand-held state, the display orientation displayed on the liquid crystal display portion 10 is rotated by 90 degrees or 270 degrees. In a case where the state is changed from the laid-down state to the laterally held state of the hand-held state, the display orientation displayed on the liquid crystal display portion 10 is not changed but maintained as such.

In a case where it is determined at the step S22 that the orientation of the user's face has not been able to be detected, the control portion 51 advances to a step S24. At the step S24, whether or not the detected inclination value has been changed through at least a prescribed angular range from a previously detected inclination value is determined by the control portion 51 on the basis of the inclination value detected by the inclination sensor 53. In other words, whether or not the user has moved the portable information display terminal 1 through a large angular range is determined. In a case where it is determined at the step S24 that the detected inclination value has been changed through less than the prescribed angular range from the previously detected inclination value, the control portion 51 advances to a step S25. At the step S25, the orientation of the screen display of the liquid crystal display portion 10 is not switched but the direction of the screen display currently displayed on the liquid crystal display portion 10 is maintained, and the flow for change and maintenance of a display orientation corresponding to the state of the portable information display terminal 1 terminates.

In a case where it is determined on the basis of the inclination value detected by the inclination sensor 53 at the step S24 that the detected inclination value has been changed through at least the prescribed angular range from the previously detected inclination value, the control portion 51 advances to a step S26. At the step S26, the orientation of the user's face is detected again by the control portion 51 with the face detection function.

Then, whether or not the orientation of the user's face has been able to be detected is determined again at a step S27. In a case where it is determined at the step S27 that the orientation of the user's face has been able to be detected, the control portion 51 advances to the aforementioned step S23. At the step S23, the screen display displayed on the liquid crystal display portion 10 is changed to a display direction corresponding to the orientation of the user's face or maintained, and the flow for change and maintenance of a display orientation corresponding to the state of the portable information display terminal 1 terminates.

In a case where it is determined at the step S27 that the orientation of the user's face has not been able to be detected, the control portion 51 advances to a step S28. At the step S28, the orientation of the screen display displayed on the liquid crystal display portion 10 is changed on the basis of the inclination value detected by the inclination sensor 53, and the flow for change and maintenance of a display orientation corresponding to the state of the portable information display terminal 1 terminates.

According to this embodiment, as hereinabove described, the orientation of the screen display of the liquid crystal display portion 10 is switched on the basis of the result of detection of the orientation of the user's face detected with the face detection function and the result of detection by the inclination sensor 53, whereby which state (attitude) the frame 20 is in can be detected by the inclination sensor 53 sensing the inclination of the frame 20 also in a case where the orientation of the user's face imaged by the camera unit 11 cannot be detected, dissimilarly to a case where the orientation of the screen display of the liquid crystal display portion 10 is switched on the basis of only the result of detection of the orientation of the user's face detected with the face detection function. Thus, the screen can be displayed in a suitable display orientation on the basis of the state (attitude) detected by the inclination sensor 53 also in the case where the orientation of the user's face imaged by the camera unit 11 cannot be detected.

According to this embodiment, as hereinabove described, the result of detection of the orientation of the user's face is prioritized over the use state detected by the inclination sensor 53 and the orientation of the screen display is switched to one corresponding to the orientation of the user's face in a case where the prescribed use state (hand-held state) is detected by the inclination sensor 53. Thus, the result of detection of the orientation of the user's face is prioritized in the case of the prescribed use state (hand-held state) where the orientation of the screen display based on the result of detection of the orientation of the user's face and the orientation of the screen display based on the inclination detected by the inclination sensor 53 easily differ from each other, so that the screen display can be displayed in an orientation more suitable to an actual use mode.

According to this embodiment, as hereinabove described, the result of detection of the orientation of the user's face is prioritized over the use state detected by the inclination sensor 53 and the orientation of the screen display is switched to one corresponding to the orientation of the user's face in a case where the use state (hand-held state) where the user uses the portable information display terminal 1 while grasping the frame 20 with his/her hand is detected. Thus, it is difficult to determine how the user sees the screen from the detection result based on the inclination detected by the inclination sensor 53 in a case where the user uses the portable information display terminal 1 while lying down in the state where the user grasps the frame 20 with his/her hand, and hence the screen display can be displayed in an orientation more suitable to an actual use mode by detecting the orientation of the user's face and switching the orientation of the screen display to one corresponding to the orientation of the user's face in the case where the portable information display terminal 1 is in the state where the user grasps the frame 20 with his/her hand.

According to this embodiment, as hereinabove described, the control of switching the orientation of the screen display of the liquid crystal display portion 10 is performed on the basis of the result of detection by the inclination sensor 53 in a case where the inclination sensor 53 detects that the portable information display terminal 1 is not in the use state (hand-held state) where the user uses the portable information display terminal 1 while grasping the frame 20 with his/her hand. In the case where the inclination sensor 53 detects that the user does not grasp the frame 20 with his/her hand as just described, the frame 20 is conceivably fixedly placed on the placing surface 100 or the like. In a case where the frame 20 is fixedly placed on the placing surface 100 or the like, the orientation of the liquid crystal display portion 10 and the orientation of the user's face when the user sees the liquid crystal display portion 10 satisfy a specific relationship, and the user's face can be detected less often than the case where the user uses the portable information display terminal 1 while grasping the frame 20 with his/her hand. Thus, in this case, the control of switching the orientation of the screen display of the liquid crystal display portion 10 is performed with the result of detection by the inclination sensor 53 without using the face detection function, whereby the screen can be displayed in a suitable display orientation.

According to this embodiment, as hereinabove described, the result of detection of the orientation of the user's face is prioritized and the orientation of the screen display of the liquid crystal display portion 10 is switched to the orientation of the screen display corresponding to the orientation of the user's face in a case where the inclination sensor 53 detects that the portable information display terminal 1 is at least in the hand-held state, while the orientation of the screen display of the liquid crystal display portion 10 is switched on the basis of the result of detection by the inclination sensor 53 in a case where the inclination sensor 53 detects that the portable information display terminal 1 is in the stood state or in the laid-down state, whereby the screen can be displayed in a suitable display orientation by the inclination sensor 53 in the case where the portable information display terminal 1 is in the stood state or the laid-down state where the frame 20 is placed on the placing surface 100. Furthermore, the screen can be displayed in a suitable display orientation matching the orientation of the user's face on the basis of the result of detection of the orientation of the user's face in the case where the portable information display terminal 1 is in the hand-held state where the user uses the portable information display terminal 1 while grasping the frame 20 with his/her hand.

According to this embodiment, as hereinabove described, the portable information display terminal 1 shifts to the standby mode without using the face detection function in a case where the inclination sensor 53 detects that the portable information display terminal 1 is not in the hand-held state where the user grasps the frame 20 and detects the inclination of the frame 20 in the unused state turning down the portable information display terminal so that the liquid crystal display portion 10 is opposed to the placing surface 100, while the portable information display terminal 1 does not shift to the standby mode but displays the screen display based on the result of detection of the orientation of the user's face on the liquid crystal display portion 10 in a case where the inclination sensor 53 detects that the portable information display terminal 1 is in the hand-held state and detects the inclination of the frame 20 in the unused state, whereby it is considered that the user does not use the portable information display terminal 1 in the case where the inclination sensor 53 detects that the portable information display terminal 1 is not in the hand-held state and detects the inclination of the frame 20 in the unused state. Thus, in this case, the portable information display terminal 1 shifts to the standby mode so that power consumption of the portable information display terminal 1 can be reduced. On the other hand, it is considered that the user uses the portable information display terminal 1 (sees the display portion while lying on his/her back, for example) in the case where the inclination sensor detects that the portable information display terminal 1 is in the hand-held state even when detecting the inclination of the frame 20 in the unused state, and hence in this case, the screen can be displayed in a suitable display orientation matching the orientation of the user's face on the basis of the result of detection of the orientation of the user's face.

According to this embodiment, as hereinabove described, the frame 20 is configured to have the outer shape settable on the placing surface 100 so that the inclination of the frame 20 in the stood state and the inclination of the frame 20 in the laid-down state become inclinations different from each other, whereby the frame 20 can be set on the placing surface 100 at different inclinations in the stood state and the laid-down state on the basis of the outer shape of the frame 20. Thus, the stood state and the laid-down state can be easily determined and specified on the basis of the result of detection by the inclination sensor 53, and the screen can be displayed in a suitable display orientation corresponding to the stood state or the laid-down state.

According to this embodiment, as hereinabove described, the orientation of the screen display of the liquid crystal display portion 10 is not switched but maintained if it is determined that an inclination value detected this time by the inclination sensor 53 falls within the prescribed angular range from an inclination value previously detected by the inclination sensor 53 in a case where the orientation of the user's face cannot be detected from the data of the user's face imaged by the camera unit 11, whereby the inclination value detected this time by the inclination sensor 53 has not been significantly changed from the inclination value previously detected by the inclination sensor 53 in the case where the inclination value detected this time by the inclination sensor 53 falls within the prescribed angular range from the inclination value previously detected by the inclination sensor 53 in the state where the user grasps the frame 20, and hence it is considered that a relative positional relationship between the user and the portable information display terminal 1 has not been significantly changed. In this case, the orientation of the screen display of the liquid crystal display portion 10 is not switched but maintained, whereby the screen can be displayed in a suitable display orientation matching the orientation of the user's face.

According to this embodiment, as hereinabove described, the orientation of the user's face is detected again with the face detection function of the camera unit 11 if it is detected that the inclination value detected this time by the inclination sensor 53 has been changed over the prescribed angular range from the inclination value previously detected by the inclination sensor 53 in a case where the orientation of the user's face cannot be detected from the data of the user's face imaged by the camera unit 11, whereby the inclination value detected this time by the inclination sensor 53 has been significantly changed from the inclination value previously detected by the inclination sensor 53 in the case where the inclination value detected this time by the inclination sensor 53 has been changed over the prescribed angular range from the inclination value previously detected by the inclination sensor 53 in the state where the user grasps the frame 20, and hence it is considered that the relative positional relationship between the user and the portable information display terminal 1 has been significantly changed or the way the user holds the frame 20 has been changed. In this case, the orientation of the user's face is detected again with the face detection function, whereby the screen can be displayed in a suitable display orientation matching the orientation of the user's face on the basis of a result of detection of the redetected orientation of the user's face.

The embodiment disclosed this time must be considered as illustrative in all points and not restrictive. The range of the present invention is shown not by the above description of the embodiment but by the scope of claims for patent, and all modifications within the meaning and range equivalent to the scope of claims for patent are included.

For example, while the example of detecting the orientation of the user's face with the face detection function only in the case where the portable information display terminal is in the hand-held state where the user uses the portable information display terminal while grasping the frame with his/her hand has been shown in the aforementioned embodiment, the present invention is not restricted to this. the orientation of the user's face may be detected with the face detection function also in a case where the portable information display terminal is in a state other than the hand-held state where the user uses the portable information display terminal while grasping the frame with his/her hand.

While the example of employing the inclination sensor as the example of the state detection sensor according to the present invention has been shown in the aforementioned embodiment, the present invention is not restricted to this. For example, a sensor other than the inclination sensor, such as an acceleration sensor may be employed to detect the state of the portable information display terminal.

While such an example that the inclination sensor detects only any of the stood state where the user uses the portable information display terminal while standing the frame and the liquid crystal display portion on the placing surface, the laid-down state where the user uses the portable information display terminal while laying down the frame and the liquid crystal display portion on the placing surface, the hand-held state where the user uses the portable information display terminal while grasping the frame with his/her hand, and the unused state where the user turns down the portable information display terminal so that the frame and the liquid crystal display portion are opposed to the placing surface has been shown in the aforementioned embodiment, the present invention is not restricted to this. The state detection sensor may detect a state other than the stood state, the laid-down state, the hand-held state, and the unused state such as that where the user uses the portable information display terminal while hanging the same on a wall surface, in addition to the stood state, the laid-down state, the hand-held state, and the unused state, for example.

While such an example that the inclination sensor configures the frame in the outer shape placeable in the stood state where the user uses the portable information display terminal while standing the frame and the liquid crystal display portion on the placing surface and the laid-down state where the user uses the portable information display terminal while laying down the frame and the liquid crystal display portion on the placing surface has been shown in the aforementioned embodiment, the present invention is not restricted to this. A stand or the like of a separate member may be so mounted on the frame (housing) that the inclination sensor places the frame in the stood state where the user uses the portable information display terminal while standing the frame and the liquid crystal display portion on the placing surface and the laid-down state where the user uses the portable information display terminal while laying down the frame and the liquid crystal display portion on the placing surface.

While the example of performing remote control of the control object apparatus by emitting the infrared rays including the remote control signal to the control object apparatus in the remote control mode has been shown in the aforementioned embodiment, the present invention is not restricted to this. The control object apparatus may be remote-controlled by employing a wireless communication standard such as Bluetooth (registered trademark) or Zigbee (registered trademark), for example.

While processing operations of the control portion have been described by employing the flow charts described in an event-driven manner in starting and described in a flow-driven manner as to processing operations after the starting for the convenience of illustration in the aforementioned embodiment, the present invention is not restricted to this. The processing operations of the control portion may be performed in a complete event-driven manner, in a complete flow-driven manner, or in a parallel processing manner.

### [Description of Reference Numerals]

1 portable information display terminal
10 liquid crystal display portion (display portion)
11 camera unit (imaging portion)
20 frame (housing)
51 control portion
53 inclination sensor (state detection sensor)
100 placing surface

### DESCRIPTION

### Title of the Invention: Portable Information Processing Device

### Technical Field

The present invention relates to a portable information processing device, and more particularly, it relates to a portable information processing device including a built-in playback portion capable of playing back media data.

### Background Technique

A portable information processing device including a built-in playback portion capable of playing back media data is known in general. Such a portable information processing device is disclosed in each of National Patent Publication Gazette No. 2009-521185 and National Patent Publication Gazette No. 2006-524877, for example.

In the aforementioned National Patent Publication Gazette No. 2009-521185, there is disclosed a portable media player (portable information processing device) including a built-in speaker and a built-in display, a wireless network interface portion, a CPU controlling playback of media data and a plurality of operation portions for performing various types of input operations. This portable media player is formed to be connectable with a media server and an external playback apparatus through the wireless network interface portion. The portable media player according to the aforementioned National Patent Publication Gazette No. 2009-521185 is formed to be capable of performing playback and playback volume control of media data from the built-in speaker and the built-in display with the CPU and to be capable of causing the external playback apparatus to execute playback of media data or playback volume control through the media server by transmitting a control signal to the media server.

In the aforementioned National Patent Publication Gazette No. 2006-524877, there is disclosed a media player (portable information processing device) including a built-in speaker and a built-in display, a connector portion connectable with an external playback apparatus through a wired or wireless media link, a CPU controlling playback of media data and a plurality of operation portions for performing various types of input operations. This media layer is formed to be capable of performing playback control and playback volume control of media data of the built-in speaker and the built-in display with the CPU and to be capable of causing the external playback apparatus to execute playback of media data or playback volume control by making communication through the connector portion (media link).

### Prior Art

### Patent Document

Patent Document 1: National Patent Publication Gazette No. 2009-521185
Patent Document 2: National Patent Publication Gazette No. 2006-524877

### Summary of the Invention

### Problems to be Solved by the Invention

However, the portable information processing device described in the aforementioned National Patent Publication Gazette No. 2009-521185 causes the external playback apparatus to execute the volume control through the media server by transmitting the control signal to the media server when performing volume control of the external playback apparatus, and hence the user must perform at least a selecting operation for switching a volume control destination to the external playback apparatus. Therefore, there is such a problem that an operation of controlling the volume of the external playback apparatus gets complicated in a case of playing back media data by employing the external playback apparatus.

The media player (portable information processing device) described in the aforementioned National Patent Publication Gazette No. 2006-524877 causes the external playback apparatus to execute volume control by making communication through the connector portion (media link), and hence it is conceivably necessary to perform at least a selecting operation for switching a volume control destination to the external playback apparatus, similarly to the aforementioned National Patent Publication Gazette No. 2009-521185. Therefore, there is such a problem that an operation of controlling the volume of the external playback apparatus gets complicated in a case of playing back media data by employing the external playback apparatus.

The present invention has been proposed in order to solve the aforementioned problems, and an object of the present invention is to provide a portable information processing device capable of simplifying an operation of controlling a volume at a time of playing back media data by employing an external playback apparatus.

### Means for Solving the Problems and Effects of the Invention

A portable information processing device according to an aspect of the present invention includes a built-in playback portion capable of playing back media data, an external playback apparatus connection portion connectable with an external playback apparatus capable of playing back media data, a control portion, controlling playback on the built-in playback portion, capable of acquiring media data, and a volume control operation portion employed in common at times of volume control of media data played back on the built-in playback portion and the external playback apparatus, while the control portion is formed to switch an object of volume control to a playback volume of the external playback apparatus and to control a playback volume of media data played back on the external playback apparatus without performing volume control of the built-in playback portion on the basis of a control operation for the volume control operation portion by a user at least in a case where playback by the built-in playback portion is not performed but playback by the external playback apparatus is performed.

In the portable information processing device according to this aspect, as hereinabove described, the control portion switching the object of volume control to the playback volume of the external playback apparatus and controlling the playback volume of media data played back on the external playback apparatus without performing volume control of the built-in playback portion at least in the case where playback by the built-in playback portion is not performed but playback by the external playback apparatus is performed is so provided that the object of volume control is automatically switched to the external playback apparatus by the control portion in the case where playback by the built-in playback portion is not performed but playback by the external playback apparatus is performed, whereby no operation of selecting a volume control destination by the user is required at the time of volume control of the external playback apparatus. Thus, the operation of controlling the volume at the time of playing back media data by employing the external playback apparatus can be simplified. In the portable information processing device according to this aspect, further, the volume control operation portion employed in common at the time of volume control of media data played back on the built-in playback portion and the external playback apparatus is so provided that volume control of the external playback apparatus can be performed by the same volume control operation as the case of the built-in playback portion by employing the same (common) volume control operation portion also when the volume control destination is automatically switched from the built-in playback portion to the external playback apparatus, whereby the operation at the time of volume control of the external playback apparatus can be simplified also according to this.

Preferably in the portable information processing device according to the aforementioned aspect, the control portion is formed to switch the object of volume control to the playback volume of the external playback apparatus serving as a playback destination at least on the basis of an operation of specifying the playback destination of media data to the external playback apparatus by the user. When forming the portable information processing device in this manner, the user can easily also automatically switch the object of volume control to the playback volume of the external playback apparatus by specifying at least the external playback apparatus as the playback destination of the media data.

Preferably in this case, the control portion is formed to switch the object of volume control to the playback volume of the external playback apparatus serving as the playback destination on the basis of an operation of specifying the playback destination of the media data and an operation of performing playback by the user. When forming the portable information processing device in this manner, the user can also automatically switch the object of volume control to the playback volume of the external playback apparatus serving as the playback destination by simply specifying the external playback apparatus as the playback destination of the media data and causing the same to execute playback.

Preferably in the portable information processing device according to the aforementioned aspect, the control portion is formed to switch the object of volume control to the playback volume of the built-in playback portion serving as a playback destination in a case where media data is played back by the built-in playback portion. When forming the portable information processing device in this manner, the object of volume control is automatically switched to the built-in playback portion when performing playback of media data with the built-in playback portion also in a case where the volume control object is set to the external playback apparatus, whereby the user can perform volume control of the portable information processing device (built-in playback portion) itself which is the playback destination with the volume control operation portion without performing a switching operation for the volume control destination.

Preferably in the portable information processing device according to the aforementioned aspect, the control portion is formed to determine whether or not the external playback apparatus is connected to the external playback apparatus connection portion and to switch a playback destination of media data to the external playback apparatus while switching the object of volume control to a playback volume of the external playback apparatus in a case where a connection operation of the external playback apparatus is performed on the external playback apparatus connection portion by the user during playback of media data by the built-in playback portion. When forming the portable information processing device in this manner, the user can switch the playback of media data by the built-in playback portion to the playback by the external playback apparatus and can also switch the object of volume control in response to the playback destination (external playback apparatus) by simply performing the connection operation of the external playback apparatus in a case where he/she thinks of switching the playback destination to the external playback apparatus during the playback of the media data on the built-in playback portion. Thugs, the portable information processing device can perform switching of the playback destination and switching of the volume control object reflecting the intention of the user, whereby convenience for the user can be improved.

Preferably in this case, the control portion is formed to switch the playback destination of media data to the built-in playback portion and to switch the object of volume control to the playback volume of the built-in playback portion in a case where the connection of the external playback apparatus to the external playback apparatus connection portion is canceled during playback of the media data by the external playback apparatus. When forming the portable information processing device in this manner, the playback of media data by the external playback apparatus can be automatically returned to the playback by the built-in playback portion and the object of volume control can also be returned to the built-in playback portion when the user cancels the connection of the external playback apparatus during the playback of the media data by the external playback apparatus. Thus, switching of the playback destination and switching of the volume control object can be performed without being accompanied by a complicated operation, whereby the convenience for the user can be improved.

Preferably in the portable information processing device according to the aforementioned aspect, the control portion is formed to switch the object of volume control from a playback volume of the external playback apparatus having performed playback to a playback volume of the built-in playback portion in a case where playback of media data by the external playback apparatus terminates. When forming the portable information processing device in this manner, the object of volume control is automatically set to the external playback apparatus during playback of media data by the external playback while the object of volume control is automatically switched to the built-in playback portion in a case where the playback of the media data by the external playback terminates, whereby the user can perform volume control of the external playback apparatus serving as the playback destination during the playback of the media data with the external playback apparatus) and can perform volume control of the built-in playback portion of the portable information processing device which is the operation object by employing the same volume control operation portion as such without requiring a switching operation after termination of the playback.

Preferably, the portable information processing device according to the aforementioned aspect further includes a housing, and the volume control operation portion is a mechanical operation portion, dedicated to volume control, set on a prescribed portion of the housing. When forming the portable information processing device in this manner, the mechanical operation portion (i.e. a volume control switch of the portable information processing device), dedicated to volume control, provided on the housing can be caused to function as a volume control switch common to the built-in playback portion and the external playback apparatus. Therefore, the user can use the mechanical operation portion as the volume control switch of a body when independently employing the portable information processing device, and can perform a volume control operation on the portable information processing device and the external playback apparatus with the dedicated volume control switch with a feeling of operating an integral apparatus also in a case of causing the external playback apparatus to play back media data without performing playback with the built-in playback portion. Further, the mechanical operation portion is so dedicated to volume control that a selecting operation for a function or the like may not be performed when performing volume control, dissimilarly to a case of an operation portion capable of operations of a plurality of functions. The convenience for the user can be further improved due to these.

Preferably in this case, the housing includes a grasp portion employed by the user for grasping and using the portable information processing device, and the volume control operation portion is set on a prescribed portion on a back surface side of the housing operable by the user in a state grasping the grasp portion. When forming the portable information processing device in this manner, the user can easily operate the volume control operation portion also in the state grasping the grasp portion of the portable information processing device at the time of playback of media data. Thus, the convenience for the user can be further improved.

Preferably in the portable information processing device according to the aforementioned aspect, the control portion is formed to regard a playback volume of one external playback apparatus specified as a playback destination of media data as the object of volume control at least on the basis of an operation of specifying the playback destination of media data to one external playback apparatus by the user in a case where a plurality of external playback apparatuses are connected to the external playback apparatus connection portion. When forming the portable information processing device in this manner, the user can perform a volume control operation employing the common volume control operation portion on the selected external playback apparatus by simply selecting which external playback apparatus is to be caused to playback media data also in the case where the plurality of external playback apparatuses are connected.

Preferably in the portable information processing device according to the aforementioned aspect, the control portion is formed to control a playback volume of media data by the external playback apparatus by performing gain control of a volume control portion of the external playback apparatus in a case of regarding the playback volume of the external playback apparatus as the object of volume control. When forming the portable information processing device in this manner, the control portion can perform gain control of the volume control portion of the external playback apparatus side in a case of controlling the playback volume of media data by the external playback apparatus by employing the volume control operation portion, whereby the same can correctly perform volume control without damaging sound quality of media data as being played back.

Preferably in this case, the control portion is formed to perform the gain control of the volume control portion of the external playback apparatus by transmitting a volume control command for performing gain control to the external playback apparatus. When forming the portable information processing device in this manner, the control portion can easily control the playback volume of media data by the external playback apparatus by transmitting the volume control command on the basis of a control operation of the volume control operation portion by the user.

Preferably in the aforementioned structure in which the control portion transmits the volume control command for performing gain control to the external playback apparatus, the volume control command for performing the gain control includes a control signal by network communication based on a prescribed network standard with respect to the external playback apparatus corresponding to the prescribed network standard allowing sharing of media data between network-connected apparatuses, or a control signal with respect to the external playback apparatus connected by a prescribed interface standard capable of performing a cooperative operation between apparatuses by connecting two apparatuses with each other by a prescribed cable capable of transmitting sound data, picture data and the control signal. The prescribed network standard allowing sharing of media data between the network-connected apparatuses is the DLNA (Digital Living Network Association) standard, for example, and the prescribed interface standard capable of performing the cooperative operation between the apparatuses by connecting the two apparatuses with each other by the prescribed cable capable of transmitting the sound data, the picture data and the control signal is the HDMI (High-Definition Multimedia Interface) standard, for example. When forming the portable information processing device in this manner, the control portion can easily transmit the control command for performing gain control to the external playback apparatus by making communication of the control signal by the network communication based on the prescribed network standard such as the DLNA or the control signal by the connection based on the prescribed interface standard such as the HDMI.

Preferably in the aforementioned structure in which the control portion transmits the volume control command for performing gain control to the external playback apparatus, the portable information processing device further includes an infrared communication portion, and the volume control command for performing the gain control includes an infrared signal for remote control with respect to the external playback apparatus. When forming the portable information processing device in this manner, the control portion can perform gain control of the volume control portion of the external playback apparatus by transmitting an infrared signal corresponding to a remote control code of the external playback apparatus from the infrared communication portion. Thus, the control portion can perform playback volume control on a large number of external playback apparatuses by utilizing remote control with the widely employed infrared signal.

Preferably in the aforementioned structure performing gain control of the volume control portion of the external playback apparatus, the control portion is formed to control the playback volume of media data by the external playback apparatus by changing the volume of the media data itself played back by the external playback apparatus in a case of regarding the playback volume of the external playback apparatus as the object of volume control and a case where the gain control of the volume control portion of the external playback apparatus cannot be performed. When forming the portable information processing device in this manner, the control portion can reliably control the playback volume of media data also in a case where the external playback apparatus does not accept the volume control command due to difference between standards on which the portable information processing device and the external playback apparatus are based, for example.

Preferably, the portable information processing device according to the aforementioned aspect further includes a display portion, and the control portion is formed to selectively display a utilizable playback destination connected to the external playback apparatus connection portion on the display portion. When forming the portable information processing device in this manner, the user can visually recognize and select the external playback apparatus utilizable as the playback destination with the display portion of the portable information processing device. Thus, the user can easily select a proper playback destination also in the case where the plurality of external playback apparatuses are connected to the external playback apparatus connection portion.

Preferably in this case, the display portion is formed to be capable of accepting an operation input by the user on a display screen, and the control portion is formed to accept both of an instruction specifying the playback destination of media data and a playback instruction for media data on the basis of a single operation by the user on the display screen of the display portion. When forming the portable information processing device in this manner, the user can play back media data on the specified playback destination by simply performing one operation on the display screen of the display portion. Thus, no complicated operation input is required, whereby the convenience for the user can be further improved.

### Brief Description of the Drawings

[Fig. 1] A diagram showing the structure of a home network employing a portable information processing device, according to an embodiment of the present invention.
[Fig. 2] A perspective view showing the appearance of the portable information processing device according to the embodiment of the present invention.
[Fig. 3] Another perspective view showing the appearance of the portable information processing device according to the embodiment of the present invention.
[Fig. 4] A block diagram showing the structure of the portable information processing device according to the embodiment of the present invention.
[Fig. 5] A diagram for illustrating an example of a content list screen displayed on a liquid crystal display portion of the portable information processing device according to the embodiment of the present invention.
[Fig. 6] A diagram for illustrating an operation on the content list screen shown in Fig. 5.
[Fig. 7] A diagram for illustrating a playback/display screen at a time of playback of media data by the portable information processing device according to the embodiment of the present invention or a television set.
[Fig. 8] A diagram for illustrating a playback state of media data according to a DMP mode in the portable information processing device according to the embodiment of the present invention.
[Fig. 9] A diagram for illustrating a playback state of media data according to a DMC mode in the portable information processing device according to the embodiment of the present invention.
[Fig. 10] A diagram for illustrating a playback state of media data according to a pseudo DMC mode in the portable information processing device according to the embodiment of the present invention.
[Fig. 11] A diagram for illustrating a playback state of media data according to a mirror display mode in the portable information, processing device according to the embodiment of the present invention.
[Fig. 12] A flow chart for illustrating media data playback processing in the portable information processing device according to the embodiment of the present invention.
[Fig. 13] A flow chart for illustrating volume control processing in the portable information processing device according to the embodiment of the present invention.
[Fig. 14] A flow chart for illustrating HDMI playback volume control processing (subroutine) in the volume control processing shown in Fig. 13.
[Fig. 15] A flow chart for illustrating DMR playback volume control processing (subroutine) in the volume control processing shown in Fig. 13.
[Fig. 16] A flow chart for illustrating processing in a case where a television set is HDMI-connected to the portable information processing device according to the embodiment of the present invention.
[Fig. 17] A flow chart for illustrating processing in a case where the portable information processing device according to the embodiment of the present invention is HDMI-disconnected.

### Modes for Carrying Out the Invention

An embodiment embodying the present invention is now described on the basis of the drawings.

First, the structure of a portable information processing device 1 according to the embodiment of the present invention is described with reference to Figs. 1 to 5 and 7.

As shown in Fig. 1, the portable information processing device 1 according to the embodiment of the present invention is interconnected with various external apparatus by a home network consisting of a wired LAN, a wireless LAN or a combination of these. These apparatuses correspond to the DLNA (Digital Living Network Alliance). The DLNA is a network standard allowing sharing of media data between network-connected corresponding apparatuses, and it is possible to mutually make communication based on the DLNA standard between these corresponding apparatuses.

The portable information processing device 1 is interconnected with a media-possessing apparatus 2 possessing media data, a television set 3 capable of playing back/displaying media data related to contents of a picture, an image and the like and a router 4 for connecting the portable information processing device 1 to the Internet as DLNA apparatuses constituting the home network. A non-DLNA television set 5 is connected to the portable information processing device 1 by an HDMI (High-Definition Multimedia Interface) cable 100. The HDMI is an interface standard capable of performing a cooperative operation between apparatuses by connecting two apparatuses with each other by a prescribed cable (HDMI cable) capable of transmitting sound data, picture data and a control signal. The television set 3 and the television set 5 are examples of the "external playback apparatus" respectively.

Functions of the respective DLNA apparatuses in the home network according to the DLNA are now described. The media-possessing apparatus 2 functions as a digital media server (hereinafter referred to as DMS) as a supply source for media data in the home network. The television set 3 functions as a digital media renderer (hereinafter referred to as DMR) as a display portion in the home network. The portable information processing device 1 functions as a digital media player (DMP) directly acquiring media data from the DMS and causing a liquid crystal display portion 10 to play back/display the same, and also functions as a digital media controller (DMC) causing the digital media renderer (DMR) to display media data acquired from the digital media server (DMS). The portable information processing device 1 is formed to pseudoly function as the DMC also with respect to the HDMI-connected non-DLNA television set 5, in addition to the functions of the DMP and the DMC as the aforementioned ordinary DLNA apparatus. In other words, the portable information processing device 1 is capable of causing the HDMI-connected non-DLNA television set 5 to play back/display media data acquired from the DMS on the basis of the DLNA standard and causing the liquid crystal display portion 10 of the portable information processing device 1 to make a display as the DMC.

Thus, the portable information processing device 1 according to this embodiment is capable of selecting the portable information processing device 1 body (the liquid crystal display portion 10 and speakers 19 (see Fig. 4) described later), the television set 3 (DMR) or the HDMI-connected television set 5 as a playback destination of media data (content) and causing the selected playback destination to play back the media data. According to this embodiment, the portable information processing, device 1 is formed to be capable of controlling a playback volume for the media data in response to the playback destination (the body, the television set 3 or the television set 5) of the media data by employing a common volume control button 20 (see Fig. 3) described later. The speakers 19 are examples of the "built-in playback portion" in the present invention, while the volume control button 20 is an example of the "volume control operation portion" in the present invention.

The structure of the portable information processing device 1 according to this embodiment is now described. As shown in Figs. 2 and 3, the portable information processing device 1 according to this embodiment includes the liquid crystal display portion (LCD) 10 displaying media data and various types of information and the speakers 19. The portable information processing device 1 further includes a switch portion 11 including the volume control button 20, a wireless LAN connection portion 12, a voice cable connection portion 13, an SD card connection portion 14, an HDMI connection portion 15, a USB connection portion 16, a volume control portion 17 and an infrared communication portion 18, as shown in Fig. 4. The voice cable connection portion 13 is an example of the "built-in playback portion" in the present invention. The wireless LAN connection portion 12 and the HDMI connection portion 15 are examples of the "external playback apparatus connection portion" in the present invention respectively. The liquid crystal display portion 10 is an example of the "display portion" in the present invention.

The liquid crystal display portion 10 has a touch panel function as shown in Fig. 4, and is so formed that the user touch-operates operation buttons on a screen displayed on the liquid crystal display portion 10 to be capable of an operation according to an application such as a media player. The portable information processing device 1 is formed to be capable of causing the liquid crystal display portion 10 to display a content list screen 200 (see Fig. 5) list-displaying all or part of media data (contents) accessible by the portable information processing device 1 and causing the liquid crystal display portion 10 to display a playback display screen 300 playing back a selected content in execution of the media player.

As shown in Fig. 2, the switch portion 11 (see Fig. 4) includes a plurality of operation buttons 21a provided on a front surface (liquid crystal display portion 10 side) side of a housing 1a and the volume control button 20 provided on a back surface side (see Fig. 3) of the housing 1a. The plurality of operation buttons 11a on the front surface side are provided for performing various types of operations such as those switching various modes (a remote control mode, a media player mode etc.) of the portable information processing device 1.

The volume control button 20 is a mechanical operation portion having two seesaw button type press portions 20a and 20b dedicated to volume control, as shown in Fig. 3. The press portion 20a is formed to increase the volume by being pressed, and the press portion 20b is formed to decrease the volume by being pressed. The volume control button 20 is provided on a prescribed position on the back surface side of the housing 1a, so that the user is capable of performing a volume control operation by pressing the press portion 20a or 20b in a state grasping grasp portions 1b of the housing 1a. This volume control button 20 is formed to function as a common volume control operation portion in a case of playing back media data (content) with any of the body (the speakers 19 and the voice cable connection portion 13), the television set 3 and the television set 5. Therefore, the volume control button 20 is so formed that an object to be subjected to volume control is switched in response to the playback destination of media data in a case where the user presses down the volume control button 20. Detailed contents of this volume control are described later. According to this embodiment, the volume control button 20 dedicated to volume control is formed to be capable of volume control by independently accepting a volume control operation by the user regardless of (without being accompanied by display switching) a display on the liquid crystal display portion (LCD) 10.

The wireless LAN connection portion 12 is provided for constituting the home network by interconnecting with the portable information processing device 1, the media-possessing apparatus 2, the television set 3 and the router 4 by a communication function (UPnP, Universal Plug and Play) based on the DLNA standard, as shown in Fig. 1. The portable information processing device 1 is formed to be capable of performing acquisition of media data from the media-possessing apparatus 2 (DMS), transmission of media data to the television set 3 (DMR) and transmission of control signals to these DLNA apparatuses through this wireless LAN connection portion 12.

As shown in Fig. 4, the voice cable connection portion 13 is so formed that an earphone (not shown) or a headphone (not shown) is connectable thereto. The SD card connection portion 14 has a card slot 14a into which an SD card 50 is insertable and a read portion 14b reading data such as media data stored in the SD card 50 inserted into the card slot 14a.

The HDMI connection portion 15 is formed to be capable of transmitting a picture and sound data to the television set 5 noncorresponding to the DLNA in a case where the portable information processing device 1 is connected with the television set 5 through the HDMI cable 100 (see Fig. 1). It is possible to transmit a control signal including a volume control command for performing volume control to the television set 5 by employing a CEC (Consumer Electronics Control) function of the HDMI through the HDMI connection portion 15.

The USB connection portion 16 is provided to be connected with an external storage unit (not shown) such as a USB memory or a hard disk through an unshown USB cable. The volume control portion 17 has a function of performing volume control of the speakers 19 (voice cable connection portion 13) by performing gain control (volume control) of a sound signal output to the voice cable connection portion 13 and the speakers 19. The infrared communication portion 18 is formed to be capable of performing remote control such as on-off operations and volume control with respect to the external television set 5 and audio apparatuses (not shown) by transmitting infrared signals corresponding to remote control codes of the external television set 5 and audio apparatuses (not shown). As shown in Fig. 3, the speakers 19 are provided on the pair of grasp portions 1b on the back surface side of the housing 1a respectively. The speakers 19 have functions of performing sound outputs at a time of playback of media data by the portable information processing device 1 and at a time of playback of various types of system sounds.

As shown in Fig. 4, the portable information processing device 1 includes a CPU 21, a flash memory 22 and a main memory 23. The CPU 21 is capable of reading programs stored in the flash memory 22 on the main memory 23 and running the same. Not only program data but also media data etc. playbackable/displayable on the liquid crystal display portion 10 are stored in the flash memory 22. According to this embodiment, the CPU 21 is formed to perform control of recognizing accessible media data at any time and making a content list display of the media data (contents) in response to an operation of the user, control of performing acquisition of media data of a content selected by the user and playback/display of the content on the liquid crystal display portion 10 or control of performing transmission of media data (content) and issuing a playback/display command to another display/playback apparatus (the DLNA television set 3 or the non-DLNA (television set 5). The CPU 21 is an example of the "control portion" in the present invention.

Further, the CPU 21 has a function of detecting HDMI connection between the portable information processing device 1 and an external playback apparatus (television set 5) through the HDMI cable 100 (see Fig. 1) and cancellation of the HDMI connection. In addition, the CPU 21 is formed to automatically switch the playback destination of media data in a case where the HDMI cable 100 is connected (a case of being HDMI-connected with the television set 5) by the user during playback of media data by the built-in liquid crystal display portion 10 and the speakers 19 or a case where the HDMI connection is canceled.

A playback mode for media data in the portable information processing device 1 according to this embodiment is now described with reference to Figs. 5 to 11.

The portable information processing device 1 according to this embodiment is capable of taking a plurality of playback modes (playback modes) by combining a content list display as well as a playback/display and a playback/display of contents (media data) on the external television set (TV set) 3 or the television set (TV set) 5. More specifically, the portable information processing device 1 is capable of mainly taking a DMP mode (see Fig. 8) performing playback of media data by employing a playback/display function of the portable information processing device 1 itself, a DMC mode (such a mode that the portable information processing device 1 functions as a DMC) (see Fig. 9) employing the DLNA television set (TV set) 3 connected to the home network as a DMR, a pseudo DMC mode (such a mode that the portable information processing device 1 functions as a pseudo DMC) (see Fig. 10) employing the non-DLNA television set (TV set) 5 HDMI-connected to the portable information processing device 1 as a pseudo DMR and a mirror playback mode (see Fig. 11) playing back/displaying the same content as a content played back/displayed on the portable information processing device 1 also on the non-DLNA television set 5 HDMI-connected to the portable information processing device 1, as shown in Figs. 8 to 11.

First, outlines of the content list display and the playback/display are described. When the media player is started by the user, the content list screen 200 is displayed on the liquid crystal display portion 10 (see Fig. 2), as shown in Fig. 5. A plurality of thumbnail-displayed (reduced image-displayed) contents 210, tabs 220 indicating the types (Photo, Video and Music) of media, a storage destination selection portion 230, a play list selection portion (Play List) 240 and a playback destination selection portion (Play to) 250 are displayed on this content list screen 200. On the content list screen 200, contents of types responsive to the tabs 220 are list-displayed by switching of the tabs 220. Selection of these contents 210 and switching of the tabs 220 etc. are performed by such a touch operation that the user touches (taps) corresponding portions by employing the touch panel of the liquid crystal display portion 10.

On this content list screen 200, contents stored in "Server" (media-possessing apparatus 2) are displayed, as shown on the storage destination selection portion 230. The user so operates the storage destination selection portion 230 that it is possible to cause the content list screen 200 to display media data (media data stored in the flash memory 22, media data stored in the storage unit connected to the USB connection portion 16, media data stored in the SD card 50 connected to the SD card connection portion 14 etc.) in the portable information processing device 1 other than the media-possessing apparatus 2. The user is capable of playing back a plurality of selected contents in specified order by selecting the play list selection portion 240 and specifying contents 210.

When the user selects the playback destination selection portion 250, a playback destination selection region 251 displaying currently connected (utilizable) playback destinations is displayed, as shown in Fig. 6. In other words, the DMR (television set 3) and the HDMI (television set 5) are selectably displayed as utilizable playback destinations in Fig. 6. The user can cause a selected playback destination to display (play back) any content (media data) 210 by selecting the playback destination of the content 210 from "DMR" and "HDMI" on the playback destination selection region 251. At this time, the user is capable of inputting a playback instruction for the content 210 and a selection instruction for the playback destination at once (with a single operation) by "dragging and dropping" the content 210 to be played back to "DMR" or "HDMI" of the playback selection region 251 on the display screen. When the content 210 is double-tapped (continuously touch-operated twice) by the user on this content list screen 200, playback of the content 210 by the portable information processing device 1 body is selected. Thus, the user so performs various types operations from the content list screen 200 by employing the touch panel of the liquid crystal display portion 10 that the portable information processing device 1 shifts to the aforementioned respective playback modes. The respective playback modes are now described in detail.

### (DMP Mode)

As shown in Fig. 8, the DMP mode is a mode of performing playback of media data by employing the built-in liquid crystal display portion 10 and the speakers 19 of the portable information processing device 1 in a case where the television set 5 is not HDMI-connected and a case where playback by the portable information processing device 1 body is selected. As shown in Fig. 5, playback of the content 210 by the portable information processing device 1 body is selected by the user on the content list screen 200, whereby playback according to this DMP mode is performed. In the DMP mode, the playback/display screen 300 of the content (media data) 210 is displayed on the liquid crystal display portion 10, while a sound of the content 210 is played back from the speakers 19 (the voice cable connection portion 13 in a case where the headphone or the like is connected). In this DMP mode, a volume control object by the volume control button 20 (see Fig. 3) is set to the portable information processing device 1 body (volume control portion 17). When playback by to the portable information processing device 1 body is selected in a case where the television set 5 is HDMI-connected, playback according to the mirror playback mode is performed.

### (DMC Mode)

As shown in Fig. 9, the DMC mode is a playback mode in a case where the DMR is selected as the playback destination of any content (media data) 210. As shown in Fig. 6, the user selects the playback selection portion (Play to) 250 on the content list screen 200 and specifies (Play to DMR) the playback destination of the content 210 to "DMR" of the playback destination selection region 251, whereby playback according to the DMC mode is performed. In this DMC mode, the portable information processing device 1 functions as the DMC (digital media controller), while media data is played back on the selected DLNA television set 3 (DMR), as shown in Fig. 9. In this case, the selected content 210 (a picture and a sound) is played back on the television set 3, while the content list screen 200 is displayed on the liquid crystal display portion 10 of the portable information processing device 1 as the DMC. In this DMC mode, the volume control object by the volume control button 20 (see Fig. 3) is set to the television set 3 (DMR) which is the playback destination of the content 210.

### (Pseudo DMC Mode)

As shown in Fig. 10, the pseudo DMC mode is a playback mode in a case where the non-DLNA television set 5 HDMI-connected to the portable information processing device 1 through the HDMI cable 100 is selected as the playback destination of any content (media data). As shown in Fig. 6, the user selects the playback destination selection portion (Play to) 250 on the content list screen 200 and specifies (Play to HDMI) the playback destination of the content 210 to "HDMI" of the playback destination selection region 251, whereby playback according to the pseudo DMC mode is performed. The pseudo DMC mode provides a display, playback and an operation similar to those in the case (DMC mode) of using the DLNA television set 3 to the user, also in the case of playing back the content 210 by employing the non-DLNA apparatus (television set 5). In this case, the media data (a picture and a sound) is played back on the television set 5, while the content list screen 200 similar to that in the DMC mode is displayed on the liquid crystal display portion 10 of the portable information processing device 1 as the pseudo DMC, as shown in Fig. 10. In this pseudo DMC mode, the volume control object by the volume control button 20 (see Fig. 3) becomes the television set 5 (HDMI) which is the playback destination of the media data.

According to this embodiment, the portable information processing device 1 is so formed that, when it is detected that the television set 5 has been HDMI-connected during playback of the content 21 according to the DMP mode (see Fig. 8), the playback destination of the content 210 is switched to the television set 5 (HDMI) at the point of time when it is detected that the television set 5 has been HDMI-connected. In other words, in a case where HDMI connection is performed during playback by the portable information processing device 1 body according to the DMP mode, the user has an intention of causing the HDMI-connected television set 5 to play back (view) the content 210 being played back. Therefore, the playback destination is switched from the portable information processing device 1 body to the television set 5 (HDMI) at the point of time when the television set 5 is HDMI-connected, whereby the portable information processing device 1 shifts to the pseudo DMC mode (see Fig. 10). Also at this time, the volume control object by the volume control button 20 is switched to the television set 5 (HDMI) which is the playback destination of the media data following the transition from the DMP mode to the pseudo DMC mode. In a case where the HDMI connection is canceled (the HDMI cable 100 is disconnected) during playback of the content 210 according to the pseudo DMC mode (see Fig. 10), on the other hand, the portable information processing device 1 shifts to the DMP mode and the playback destination of the content 210 is switched to the liquid crystal display portion 10 and the speakers 19 in this embodiment. Therefore, the volume control object by the volume control button 20 (see Fig. 3) in this case is returned to the portable information processing device 1 body (volume control portion 17) which is the playback destination of the content 210.

### (Mirror Playback Mode)

As shown in Fig. 11, the mirror playback mode is such a mode that any content 210 selected by the user is played back on both of the portable information processing device 1 and the non-DLNA television set 5, dissimilarly to the pseudo DMC mode. The portable information processing device 1 shifts to the mirror playback mode in a state where the portable information processing device 1 and the television set 5 are HDMI-connected with each other and in a case where playback by the portable information processing device 1 body is selected. In the case where the portable information processing device 1 and the television set 5 are HDMI-connected with each other when playback by the portable information processing device 1 body is selected by the user on the content list screen 200 as shown in Fig. 5, the content 210 (the picture and the sound) is played back from both of the portable information processing device 1 and the television set 5. In this mirror playback mode, the volume control object by the volume control button 20 becomes the portable information processing device 1 body (volume control portion 17) which is a direct operation object by the user. The portable information processing device 1 itself functions as the DMP playing back/displaying the content in the mirror playback mode, and hence this mirror playback mode can be regarded as one mode of the DMP mode (see Fig. 8) in the state where the portable information processing device) 1 and the television set 5 are HDMI-connected with each other.

In the state where the portable information processing device 1 and the television set 5 are HDMI-connected with each other, a mirror display is regularly performed except for the time of playback according to the pseudo DMC mode. In other words, the content list screen 200 is mirror-displayed on the portable information processing device 1 (liquid crystal display portion 10) and the television set 5 at a time of non-playback of the content 210 (media data). At the time of non-playback of the content 210 (media data), the volume control object by the volume control button 20 (see Fig. 3) becomes the portable information processing device 1 body (volume control portion 17) which is the direct operation object by the user.

A playback processing flow for media data (content) in the portable information processing device 1 according to this embodiment is now described with reference to Figs. 5 to 12. The processing described below is executed by the CPU 21 of the portable information processing device 1. In the following, a case of playing back a content 210 of a video (Video) as media data including a picture and a sound is described for the purpose of description.

As shown in Fig. 12, the media player (application) is so started by an operation of the user that the playback processing for the media data (content 210) is started. When the media player is started, the presence or absence of HDMI connection is determined by the CPU 21 at a step S1. In a case where the television set 5 is HDMI-connected through the HDMI connection portion 15, the processing advances to a step S2. In a case where the television set 5 is not HDMI-connected, on the other hand, the processing shifts to a step S10.

At the step S2, the content list screen 200 (see Fig. 5) is displayed following the starting of the media player. At this step S2, the television set 5 is HDMI-connected, and hence the content list screen 200 shown in Fig. 5 is mirror-displayed on both of the liquid crystal display portion 10 of the portable information processing device 1 and the television set 5. At this time, the volume control object by the volume control button 20 enters a state being set to the portable information processing device 1 body (volume control portion 17).

At a step S3, a playback instruction by the user employing the touch panel of the liquid crystal display portion 10 is accepted by the CPU 21. At a step S4, whether or not the HDMI (television set 5) has been selected (Play to HDMI) as the playback destination is determined. In a case (case of Play to HDMI) where "HDMI" of the playback destination selection region 251 is selected by the user as the playback destination of the content 210 on the content list screen 200 so that the playback instruction is input as shown in Fig. 6, the processing advances to a step S5. In a case where a playback destination other than the HDMI is selected, the processing advances to a step S6.

At the step S5, playback of the content 210 (media data) according to the pseudo DMC mode is performed on the basis of that the HDMI (television set 5) has been selected as the playback destination. The picture and the sound of the content 210 are played back by the television set 5 as shown in Fig. 10, while the content list screen 200 (see Fig. 5) is displayed on the liquid crystal display portion 10 of the portable information processing device 1 as the pseudo DMC. Further, the volume control object by the volume control button 20 is set to the television set (TV set) 5 which is the playback destination of the content 210 (media data) by the CPU 21.

On the other hand, whether or not the DMR (television set 3) has been selected (Play to DMR) as the playback destination is determined at the step S6, as shown in Fig. 12. In a case (case of Play to DMR) where "DMR" of the playback destination selection region 251 is selected by the user on the content list screen 200 as the playback destination of the content 210 as shown in Fig. 6 so that a playback instruction is input, the processing advances to a step S7. In a case (case where body playback is selected) where the content 210 is double-tapped by the user so that a playback instruction is input, the processing advances to a step S8.

At the step S7, playback of the content 210 (media data) according to the DMC mode is performed on the basis of that the DMR (television set 3) has been selected as the playback destination. The picture and the sound of the content 210 are played back by the television set 3 as shown in Fig. 9, while the content list screen 200 (see Fig. 5) is displayed on the liquid crystal display portion 10 of the portable information processing device 1 as the DMC. Further, the volume control object by the volume control button 20 is set to the television set (TV set) 3 (DMR) which is the playback destination of the content 210 (media data) by the CPU 21.

At the step S8, playback in the mirror playback mode by both of the portable information processing device 1 and the television set 5 is performed on the basis of that playback by the body (portable information processing device 1) has been selected by the user in the state where the portable information processing device 1 and the television set 5 are HDMI-connected with each other, as shown in Fig. 12. In other words, the picture and the sound of the content 210 are played back on both of the portable information processing device 1 and the television set 5, as shown in Fig. 11. Further, the volume control object by the volume control button 20 is set to the portable information processing device 1 body (volume control portion 17) by the CPU 21.

When the playback of the content 210 (media data) terminates at the step S9, the volume control object by the volume control button 20 is set to the portable information processing device 1 body (volume control portion 17) by the CPU 21, as shown in Fig. 12. In a case where the playback has been performed according to the pseudo DMC mode (see Fig. 10) at the step S5 or the DMC mode (see Fig. 9) at the step S7, therefore, the volume control object is returned to the portable information processing device 1 body (volume control portion 17) at this step S9. Thereafter the processing returns to the step S2, and the content list screen 200 shown in Fig. 5 is mirror-displayed, while an operation such as a next playback instruction by the user is performed.

In a case where the television set 5 has not been HDMI-connected to the HDMI connection portion 15 at the step S1, on the other hand, the processing shifts to the step S10, and the content list screen 200 (see Fig. 5) is displayed on the liquid crystal display portion (LCD) 10 of the portable information processing device 1. At this time, the volume control object by the volume control button 20 enters a state set to the portable information processing device 1 body (volume control portion 17). At a step S11, a playback instruction by the user employing the touch panel of the liquid crystal display portion 10 is accepted by the CPU 21.

At a step S12, whether or not the DMR (television set 3) has been selected (Play to DMR) as the playback destination of the content 210 is determined, similarly to the step S6. In a case (Play to DMR) where a playback instruction setting the playback destination to the DMR is input, the processing advances to a step S13. In a case where a playback instruction setting the playback destination to the body is input, on the other hand, the processing advances to a step S14. At this step S12, the television set 5 is not HDMI-connected, and hence "HDMI" is not displayed on the playback destination selection region 251 in a case (see Fig. 6) where the user selects the playback destination selection portion (Play to) 250 either.

At the step S13, playback of the content 210 (media data) according to the DMC mode is performed on the basis of that the DMR (television set 3) has been selected as the playback destination, similarly to the step S7. Further, the volume control object by the volume control button 20 is set to the television set (TV set) 3 (DMR) which is the playback destination of the content 210 (media data) by the CPU 21.

At the step S14, playback by the portable information processing device 1 in the DMP mode (see Fig. 8) is performed on the basis of that playback by the body (portable information processing device 1) has been selected. At this time, the content 210 is displayed (playback display screen 300 (see Fig. 7) is displayed) on the liquid crystal display portion (LCD) 10 of the portable information processing device 1, while the sound of the content 210 is played back from the speakers 19 (the voice cable connection portion 13 in a case where the headphone or the like is connected). The volume control object by the volume control button 20 is set to the portable information processing device 1 body (volume control portion 17) by the CPU 21.

When the playback of the content 210 (media data) thereafter terminates at a step S15, the volume control object by the volume control button 20 is set to the portable information processing device 1 body (volume control portion 17) which is an operation object by the user. In a case where the playback has been performed according to the DMC mode (see Fig. 9) at the step S13, therefore, the volume control object by the volume control button 20 is returned to the portable information processing device 1 body (volume control portion 17) at this step S15. Thereafter the processing returns to the step S10, and the content list screen 200 shown in Fig. 5 is displayed on the liquid crystal display portion (LCD) 10 of the portable information processing device 1. Playback processing in the respective playback modes based on operation inputs of the user is performed in this manner.

Volume control processing in a case where the volume control button 20 is pressed down is now described with reference to Figs. 1 and 8 to 15.

As hereinabove described, the volume control object by the volume control button 20 is set to the portable information processing device 1 body (volume control portion 17) at the time of non-playback (also including the mirror display in the HDMI-connected state) of media data. Also in the case (case of the DMP mode (see Fig. 8) or the mirror playback mode (see Fig. 11)) where the playback of media data by the portable information processing device 1 body is performed, the volume control object is set to the portable information processing device 1 body (volume control portion 17). In a case (case of the DMC mode (see Fig. 9) or the pseudo DMC mode (see Fig. 10)) where the playback of media data by the portable information processing device 1 body is not performed but the external playback apparatus (DMR or HDMI) is selected as the playback destination of media data, on the other hand, the volume control object is set to each selected external playback apparatus (DMR or HDMI). The volume control processing is executed according to this setting of the volume control object.

As shown in Fig. 13, it is detected by the CPU 21 that the press portion 20a or 20b of the volume control button 20 of the portable information processing device 1 has been pressed down, whereby the volume control processing is started. When the press portion 20a or 20b of the volume control button 20 is pressed down by the user, whether or not media data is being played back by the portable information processing device 1 body (whether or not the volume control object is set to the portable information processing device 1 body (volume control portion 17)) is determined by the CPU 21 at a step S21. In a case where playback of media data is executed according to the mirror playback mode at the step S8 of Fig. 12 or the DMP mode at the step S14, the processing advances to a step S22. In a case where playback of media data is executed by the external playback apparatus (DMR or HDMI) or a case where playback of media data is not executed, on the other hand, the processing advances to a step S23.

At the step S22, gain control (volume control) of the volume control portion 17 is performed by the CPU 21 in response to a press frequency of the press portion 20a or 20b on the basis of that the volume control object is set to the portable information processing device 1 body (volume control portion 17). Thus, the gain of the sound signal output from the volume control portion 17 to the speakers 19 and the voice cable connection portion 13 is controlled as shown in Fig. 4, whereby the playback volume for the media data is controlled. In a case where volume control of the portable information processing device 1 body is performed, the volume control processing terminates in this manner.

At the step S23, on the other hand, whether or not media data is being played back by the HDMI-connected television set 5 (whether or not the volume control object is set to the HDMI (television set 5)) is determined. In other words, the playback by the portable information processing device 1 body is not performed but media data is being played back by the television set 5 in a case (see Fig. 10) where the playback of media data is executed according to the pseudo DMC mode at the step S5 of Fig. 12, and hence the volume control object is set to the television set 5 in this case. Therefore, the processing advances to a step S24, and HDMI playback volume control processing is performed.

The HDMI playback volume control processing is now described with reference to Fig. 14.

In the HDMI playback volume control processing, a volume control command responsive to the press frequency of the press portion 20a or 20b of the volume control button 20 is first transmitted from the CPU 21 to the television set 5 through the HDMI connection portion 15 at a step S31. At this time, the volume control command is transmitted to the television set 5 by the CEC function of the HDMI. When the volume control command is received by the television set 5, gain control (volume control) of the volume control portion 5a (see Fig. 1) of the television set 5 is performed on the basis of the volume control command, whereby the playback volume for the media data is controlled.

Then, whether or not change (control) of the volume on the television set 5 side has been completed is determined by the CPU 21 at a step S32. In a case where the volume control has been properly performed, the HDMI playback volume control processing terminates and the processing returns to the step S24 (see Fig. 13) while volume control processing is also completed. In a case where the volume control has not been properly performed due to compatibility between apparatuses or the like, on the other hand, the processing advances to a step S33.

At the step S33, an infrared signal (volume control signal responsive to the press frequency of the press portion 20a or 20b of the volume control button 20) corresponding to the remote control code of the television set 5 is transmitted by the CPU 21 through the infrared communication portion 18. When the infrared signal is received by the television set 5, gain control (volume control) of the volume control portion 5a (see Fig. 1) of the television set 5 is performed on the basis of the infrared signal, whereby the playback volume for the media data is controlled. At a step S34, whether or not change (control) of the volume on the television set 5 side has been completed is determined by the CPU 21. In a case where the volume control of the television set 5 has been performed, the HDMI playback volume control processing terminates and the processing returns to the step S24 (see Fig. 13), while the volume control processing is also completed. In a case where the transmitted infrared signal has not been properly received by the television set 5 or the like, on the other hand, the processing advances to a step S35.

At the step S35, the volume of the media data (sound data) itself transmitted from the HDMI connection portion 15 to the television set 5 through the HDMI cable 100 is changed by the CPU 21. In other words, the CPU 21 performs amplitude (volume) control by multiplying the media data (sound data) itself output from the HDMI connection portion 15 by a prescribed coefficient corresponding to a quantity of volume control responsive to the press frequency of the press portion 20a or 20b of the volume control button 20, whereby the volume of the media data (sound data) itself is changed. Then, the media data (sound data) volume-controlled by the CPU 21 is transmitted to the television set 5, whereby control of the playback volume of the television set 5 is performed. When the HDMI playback volume control processing is performed in this manner, the processing returns to the step S24 (see Fig. 13), and the volume control processing is complected. The HDMI playback volume control processing is performed in this manner.

In a case where it is determined that media data is not being played back by the HDMI-connected television set 5 at the step S23 of Fig. 13, the processing advances to a step S25. In other words, the processing advances to the step S25 in a case where playback of media data is executed by the DMR (television set 3) or a case where playback of media data is not performed.

At the step S25, whether or not media data is being played back by the DMR (television set 3) (whether or not the volume control object is set to the DMR (television set 3)) is determined. In other words, playback by the portable information processing device 1 body is not performed but media data is being played back by the television set 3 (DMR) in a case (see Fig. 9) where the playback of media data is executed according to the DMC mode at the step S7 and the step S13 of Fig. 12, and hence the volume control object is set to the television set 3 (DMR) in this case. Therefore, the processing advances to a step S26, and DMR playback volume control processing is performed.

The DMR playback volume control processing is now described with reference to Fig. 15.

In the DMR playback volume control processing, a volume control command responsive to the press frequency of the press portion 20a or 20b of the volume control button 20 is first transmitted from the CPU 21 to the television set 3 (DMR) through the wireless LAN connection portion 12 at a step S41. At this time, the volume control command is transmitted by network communication (UPnP) based on the DLNA standard. When the volume control command is received by the television set 3 (DMR), gain control (volume control) of the volume control portion 3a (see Fig. 1) of the television set 3 (DMR) is performed on the basis of the volume control command, whereby the playback volume for the media data is controlled.

Then, whether or not change (control) of the volume on the television set 3 side has been completed is determined by the CPU 21 at a step S42. In a case where the volume control has been properly performed, the DMR playback volume control processing terminates and the processing returns to the step S26 (see Fig. 13) while the volume control processing is also completed. In a case where the volume control has not been properly performed, on the other hand, the processing advances to a step S43.

At the step S43, an infrared signal (volume control signal responsive to the press frequency of the press portion 20a or 20b of the volume control button 20) responsive to the remote control code of the television set 3 (DMR) is transmitted by the CPU 21 by employing the infrared communication portion 18. When the infrared signal is received by the television set 3, gain control (volume control) of the volume control portion 3a (see Fig. 1) of the television set 3 is performed on the basis of the infrared signal, whereby the playback volume for the media data is controlled. At a step S44, whether or not change (control) of the volume on the television set 3 (DMR) side has been completed is determined by the CPU 21. In a case where the volume control of the television set 3 (DMR) has been properly performed, the DMR playback volume control processing terminates and the processing returns to the step S26 (see Fig. 13), while the volume control processing is also completed. In a case where the transmitted infrared signal (volume control signal) has not been properly received by the television set 3 (DMR) or the like, on the other hand, the processing advances to a step S45.

At the step S45, the volume of the media data (sound data) itself transmitted to the television set 3 (DMR) is changed. In other words, the CPU 21 performs amplitude (volume) control by multiplying the media data (sound data) itself by the prescribed coefficient corresponding to the quantity of volume control responsive to the press frequency of the press portion 20a or 20b of the volume control button 20, whereby the playback volume of the television set 3 (DMR) is controlled. When the DMR playback volume control processing is performed in this manner, the processing returns to the step S26 (see Fig. 13), while the volume control processing is completed. The DMR playback volume control processing is performed in this manner.

As hereinabove described, volume control processing is executed every time the volume control button 20 is pressed down by the user, whereby control of the playback volume responsive to the playback destination of the media data is performed.

Processing in a case where the external playback apparatus (television set 5) is HDMI-connected is now described with reference to Figs. 8 to 10, 12 and 16. This processing is processing in a case where the television set 5 is HDMI-connected to the HDMI connection portion 15 through the HDMI cable 100 by the user. First, it is detected by the CPU 21 that the television set 5 has been HDMI-connected, whereby the processing is started.

When it is determined that the television set 5 has been HDMI-connected, whether or not media data is being played back by the portable information processing device 1 body is determined at a step S51, as shown in Fig. 16. In a case where playback is performed in the DMP mode (see Fig. 8) in which media data is played back by the liquid crystal display portion 10 and the speakers 19 (or the voice cable connection portion 13), the processing advances to a step S52. In a case where playback of media data is not performed or a case where playback of media data is performed according to the DMC mode (see Fig. 9) causing the television set 3 (DMR) to play back media data, on the other hand, the processing advances to a step S53.

At the step S52, the portable information processing device 1 is switched to playback according to the pseudo DMC mode (see Fig. 10) on the basis of that the television set 5 has been HDMI-connected during playback of media data according to the DMP mode. At this time, the volume control object by the volume control button 20 is set to the television set (TV set) 5 (HDMI) which is the playback destination of the media data by the CPU 21, following the switching from the DMP mode to the pseudo DMC mode. Thus, the processing in the case where the television set 5 is HDMI-connected terminates, while the processing at the step S5 (playback according to the pseudo DMC mode) in the media data playback processing (see Fig. 12) is performed as such.

At the step S53, on the other hand, the portable information processing device 1 is switched to the mirror display performing the same screen display on both of the liquid crystal display portion 10 of the portable information processing device 1 and the television set 5. In this case, the volume control object by the volume control button 20 is not changed. In a case where playback of media data is not performed, therefore, the state where the volume control object by the volume control button 20 is set to the portable information processing device 1 body (volume control portion 17) is maintained. In a case where playback of media data is performed according to the DMC mode (see Fig. 9), the state where the volume control object by the volume control button 20 is set to the television set 3 (DMR) which is the playback destination of the media data is maintained.

The processing in the case where the television set 5 is HDMI-connected is performed in the aforementioned manner.

Processing in a case where the external playback apparatus) (television set 5) having been HDMI-connected is disconnected is now described with reference to Figs. 4, 8, 10 to 12 and 17. This processing is processing in a case where the HDMI cable 100 connecting the television set 5 is disconnected from the HDMI connection portion 15 by the user. First, it is determined by the CPU 21 that the HDMI connection of the television set 5 has been canceled (the HDMI cable 100 has been disconnected), whereby the processing is started.

When it is detected that the HDMI connection of the television set 5 has been canceled, whether or not media data is being played back according to the pseudo DMC mode (see Fig. 10) is determined at a step S61, as shown in Fig. 17. In a case where playback is performed in the pseudo DMC mode regarding the HDMI (television set 5) as the playback destination of the media data, the processing advances to a step S62. In a case where playback of media data is not performed or playback of media data according to the mirror playback mode (see Fig. 11) is performed, on the other hand, the processing advances to a step S63.

At the step S62, the portable information processing device 1 is switched to playback according to the DMP mode (see Fig. 8) on the basis of that the HDMI connection has been canceled during playback of media data according to the pseudo DMC mode. In other words, the playback destination of the media data is switched from the television set 5 (HDMI) to the portable information processing device 1 body, and media data is played back by the liquid crystal display portion 10 and the speakers 19 (or the voice cable connection portion 13, see Fig. 4). Following the switching from the pseudo DMC mode to the DMP mode, the volume control object by the volume control button 20 is set to the portable information processing device 1 body (volume control portion 17). Thus, the processing in the case where the HDMI connection is disconnected terminates, and the processing at the step S14 (playback according to the DMP mode) of the media data playback processing (see Fig. 12) is performed as such.

At the step S63, on the other hand, an output of signals (picture and sound signals etc.) through the HDMI connection portion 15 is stopped. In this case, the volume control object by the volume control button 20 is not changed. In a case where playback of media data is not performed, therefore, the state where the volume control object by the volume control button 20 is set to the portable information processing device 1 body (volume control portion 17) is maintained. In a case where playback of media data is performed according to the DMC mode causing the television set 3 (DMR) to playback the media data, the state where the volume control object by the volume control button 20 is set to the television set 3 (DMR) which is the playback destination of the content 210 (media data) is maintained.

The processing in the case where the HDMI connection is disconnected is performed in the aforementioned manner.

According to this embodiment, as hereinabove described, the CPU 21 switches the volume control object to the playback volume of the television set 3 or the television set 5 which is the playback destination and controls the playback volume for the media data played back on the television set 3 or the television set 5 which is the playback destination without performing volume control of the body (volume control portion 17) on the basis of a control operation of the volume control button 20 by the user in the case (the case of the DMC mode or the pseudo DMC mode) where playback of the media data by the built-in speakers 19 (or the voice cable connection portion 13) is not performed but playback is performed by the external television set 3 (DMR) or the television set 5 (HDMI) so that the volume control object is automatically switched to the television set 3 (DMR) or the television set 5 (HDMI) which is the playback destination by the CPU 21 in the case of performing playback according to the DMC mode or the pseudo DOC mode, whereby no operation of selecting the volume control destination by the user is required at the time of volume control of the television set 3 or the television set 5. Thus, the operation of controlling the volume at the time of playing back media data by employing the external television set 3 or the television set 5 can be simplified.

According to this embodiment, as hereinabove described, the volume control button 20 employed in common at the time of volume control of media data played back on the built-in speakers 19 (voice cable connection portion 13), the external television set 3 (DMR) and the external television set 5 (HDMI) is so provided that volume control of the external television set 3 or the television set 5 can be performed by the same volume control operation as the case of the built-in speakers 19 (voice cable connection portion 13) by employing the same (common) volume control button 20 also in a case where the volume control destination is automatically switched from the built-in speakers 19 (or the voice cable connection portion 13) to the external television set 3 (DMR) or the television set 5 (HDMI), whereby the operation at the time of volume control of the external television set 3 and the television set 3 can be simplified also according to this.

According to this embodiment, as hereinabove described, the CPU 21 is formed, at least in the case (Play to DMR) where the operation of specifying the playback destination of media data to the external television set 3 (DMR) is performed, the case (Play to HDMI) where the operation of specifying the playback destination to the television set 5 (HDMI) is performed by the user, or the case where the television set 5 is HDMI-connected by the user at the time of playback in the DMP mode, to switch the volume control object to the playback volume of the external television set 3 (DMR) or the television set 5 (HDMI) which is the playback destination on the basis of this operation of the user. The portable information processing device 1 is so formed in this manner that the user can also easily automatically switch the volume control object to the playback volume of the television set 3 or the television set 5 by specifying at least the television set 3 or the television set 5 as the playback destination of media data.

According to this embodiment, as hereinabove described, the CPU 21 switches the volume control object to the body (volume control portion 17) in the case (the case of the DMP mode or the mirror playback mode) where media data is being played back by the built-in speakers 19 (voice cable connection portion 13) so that the volume control object is automatically switched to the body (volume control portion 17) when performing playback of media data by the speakers 19 (voice cable connection portion 13) also in the case where the volume control object is set to the external television set 3 (DMR) or the television set 5 (HDMI), whereby the user can perform volume control of the portable information processing device 1 (volume control portion 17) itself which is the playback destination with the volume control button 20 without performing a switching operation of the volume control destination.

According to this embodiment, as hereinabove described, the CPU 21 switches the portable information processing device 1 to the pseudo DMC mode and switches the volume control object to the playback volume of the television set 5 (HDMI) in the case where the connection operation of the television set 5 (HDMI) is performed on the HDMI connection portion 15 by the user during playback according to the DMP mode so that, in a case where the user thinks of switching the playback destination to the television set 5 during playback of media data according to the DMP mode, the user can switch the portable information processing device 1 from the playback of the media data according to the DMP mode (body (playback) to the playback by the television set 5 (HDMI) and can also switch the object of volume control in response to the playback destination (television set 5) by simply performing the connection operation (HDMI connection) of the television set 5 (HDMI). Thus, the portable information processing device 1 can perform switching of the playback destination and switching of the volume control object reflecting the intention of the user, whereby the convenience for the user can be improved.

According to this embodiment, as hereinabove described, the CPU 21 is formed to switch the portable information processing device 1 to the DMP mode and to switch the volume control object to the portable information processing device 1 in the case where the HDMI connection of the television set 5 (HDMI) is canceled from the HDMI connection portion 15 during playback according to the pseudo DMC mode, whereby the portable information processing device 1 can be automatically returned to the playback in the DMP mode and the object of volume control can also be returned to the body (volume control portion 17) when the user cancels the connection of the television set 5 (HDMI) during the playback of media data by the television set 5 (HDMI). Thus, switching of the playback destination and switching of the volume control object can be performed without being accompanied by a complicated operation, whereby the convenience for the user can be improved.

According to this embodiment, as hereinabove described, the CPU 21 switches the object of volume control from the playback volume of the television set 3 (DMR) or the television set 5 (HDMI) having performed the playback to the playback volume of the body (volume control portion 17) in the case where playback (playback according to the DMC mode or the pseudo DMC mode) of media data by the external playback apparatus terminates so that the volume control object is automatically set to the external television set 3 (DMR) or the television set 5 (HDMI) during playback of media data according to the DMC mode or the pseudo mode while the volume control object is automatically switched to the body (volume control portion 17) in a case where playback of media data according to the DMC mode or the pseudo DMC mode terminates, whereby the user can perform volume control of the television set 3 (DMR) or the television set 5 (HDMI) which is the playback destination during the playback of media data according to the DMC mode or the pseudo DMC mode, and can perform volume control of the speakers 19 (voice cable connection portion 13) of the portable information processing device 1 which is the operation object by employing the same volume control button 20 as such without requiring a switching operation also after termination of the playback.

According to this embodiment, as hereinabove described, the volume control button 20 is formed by the mechanical operation portion, dedicated to volume control, set on the prescribed portion of the housing 1a, whereby the mechanical volume control button 20, dedicated to volume control, provided on the housing 1a can be caused to function as a volume control switch common to the built-in speakers 19 (voice cable connection portion 13), the external television set 3 (DMR) and the television set 5 (HDMI). Therefore, the user can use the volume control button 20 as the volume control switch of the body when independently employing the portable information processing device 1 (in the DMP mode or the like), and can perform a volume control operation with the dedicated volume control button 20 on the portable information processing device 1 (DMC) and the external television set 3 (DMR) as well as the television set 5 (HDMI) with a feeling of operating an integral apparatus also in cases of playing back media data according to the DMC mode and the pseudo DMC mode. Further, the volume control button 20 is so formed by the mechanical operation portion dedicated to volume control that a selecting operation for a function or the like may not be performed when performing volume control, dissimilarly to a case of a general-purpose operation portion capable of operating a plurality of functions. The convenience for the user can be further improved according to these.

According to this embodiment, as hereinabove described, the volume control button 20 is set on the prescribed portion on the back surface side of the housing 1a operable by the user in the state grasping the grasp portions 1b, whereby the user can easily operate the volume control button 20 in the state grasping the grasp portions 1b of the portable information processing device 1 at the time of playback of media data. Thus, the convenience for the user can be further improved.

According to this embodiment, as hereinabove described, the CPU 21 performs control for regarding the playback volume of one external playback apparatus (DMR or HDMI) specified as the playback destination of media data as the volume control object on the basis of at least an operation (Play to DMR (or HDMI)) of specifying the playback destination of the media data to one external playback apparatus by the user in the case where two external playback apparatuses (the television set 3 (DMR) and the television set 5 (HDMI)) are connected. The portable information processing device 1 is so formed in this manner that the user can perform a volume control operation employing the common volume control button 20 on the selected television set 3 (DMR) or the television set 5 (HDMI) by simply selecting on which one of the television set 3 (DMR) and the television set 5 (HDMI) the media data is to be played back.

According to this embodiment, as hereinabove described, the CPU 21 controls the playback volume for the media data by the television set 3 or the television set 5 by performing gain control of the volume control portion 3a of the television set 3 (DMR) or the volume control portion 5a of the television set 5 (HDMI) in the case of regarding the playback volume of the television set 3 (DMR) or the television set 5 (HDMI) as the volume control object so that the CPU 21 can perform gain control of the volume control portion 3a on the television set 3 side or the volume control portion 5a on the television set 5 side in the case of controlling the playback volume for the media data by the television set 3 or the television set 5 by employing the volume control button 20, whereby the CPU 21 can correctly perform the volume control without damaging sound quality of the media data as being played back.

According to this embodiment, as hereinabove described, the CPU 21 is formed to perform gain control of the volume control portion 3a of the television set 3 or the volume control portion 5a of the television set 5 by transmitting the volume control command (control signal) for performing gain control to the television set 3 or the television set 5, whereby the CPU 21 can easily control the playback volume for the media data by the television set 3 or the television set 5 by transmitting the volume control command (control signal) on the basis of a control operation on the volume control button 20 by the user.

According to this embodiment, as hereinabove described, the CPU 21 is formed to transmit volume control commands for performing gain control by a control signal according to the network communication (UPnP) based on the DLNA standard with respect to the television set 3 (DLNA apparatus) and a control signal employing the CEC function with respect to the HDMI-connected television set 5 respectively, whereby the CPU 21 can easily transmit the control command for performing gain control to the television set 3 or the television set 5.

According to this embodiment, as hereinabove described, the CPU 21 employs the infrared signal corresponding to the remote control code of the external television set 5 as the volume control command for performing gain control, whereby the CPU 21 can perform gain control of the volume control portion 5a of the television set 5 by transmitting the infrared signal corresponding to the remote control code of the external television set 5 from the infrared communication portion 18. Thus, the CPU 21 can perform playback volume control on a large number of external playback apparatuses by utilizing remote control with the widely employed infrared signal.

According to this embodiment, as hereinabove described, the CPU 21 controls the playback volume for the media data by the television set 3 (television set 5) by changing the volume of the media data (sound data) itself played back by the television set 3 (television set 5) in a case of regarding the playback volume of the television set 3 (television set 5) as the object of volume control and a case where gain control of the volume control portion 3a (5a) of the television set 3 (television set 5) cannot be performed, whereby the CPU 21 can reliably control the playback volume for the media data also in a case where the television set 3 (television set 5) does not accept the volume control command due to difference between standards on which the portable information processing device 1 and the television set 3 (television set 5) are based, for example.

According to this embodiment, as hereinabove described, the CPU 21 is formed to selectably display the utilizable playback destinations connected to the wireless LAN connection portion 12 and the HDMI connection portion 15 on the display screen (playback destination selection region 251) of the liquid crystal display portion 10, whereby the user can visually recognize and select any external playback apparatus (the television set 3 or the television set 5) utilizable as the playback destination through the liquid crystal display portion 10 of the portable information processing device 1. Thus, the user can easily select a proper playback destination also in the case where a plurality of external playback apparatuses (the (television set 3 and the television set 5 etc.) are connected to the wireless LAN connection portion 12 and the HDMI connection portion 15.

According to this embodiment, as hereinabove described, the portable information processing device 1 is so formed that both of the instruction specifying the playback destination of media data and the playback instruction for the media data are accepted on the basis of the single operation (drag and drop) by the user on the content list screen 200 of the liquid crystal display portion 10, whereby the user can play back media data on the specified playback destination (the television set 3 or the television set 5) by simply performing one operation (drag and drop) on the content list screen 200 of the liquid crystal display portion 10. Thus, no complicated operation input such as that in a case where the user separately performs a selecting operation for media data to be played back and a selecting operation for a playback destination respectively is required, whereby the convenience for the user can be further improved.

The embodiment disclosed this time must be considered as illustrative in all points and not restrictive. The range of the present invention is shown not by the above description of the embodiment but by the scope of claims for patent, and all modifications within the meaning and range equivalent to the scope of claims for patent are further included.

For example, while the example of connecting the portable information processing device 1 and the DLNA television set 3 with each other by a wireless network based on the DLNA standard and HDMI-connecting the portable information processing device 1 and the non-DLNA television set 5 with each other has been described in the aforementioned embodiment, the present invention is not restricted to this. The present invention is applicable to any connection system so far as the same can connect the portable information processing device with external playback apparatuses capable of playing back media data. Further, the portable information processing device 1 and the non-DLNA television set 5 may be connected with each other in a wireless manner without through the home network.

While the example of constituting the home network of the portable information processing device 1 and the DLNA apparatuses has been described in the aforementioned embodiment, the present invention is not restricted to this. According to the present invention, external playback apparatuses and the portable information processing device may be individually connected with each other without constituting a home network.

While the example of performing playback in four playback modes of the DMP mode, the DMC mode, the pseudo DMC mode and the mirror playback mode in the case of performing playback of media data including pictures and sounds while changing the object of volume control in response to the playback destination of media data in each mode has been described in the aforementioned embodiment, the present invention is not restricted to this. According to the present invention, the portable information processing device may be formed to change the object of volume control to the external playback apparatus serving as the playback destination when simply causing any external playback apparatus to play back media data without providing the playback modes. Further, it is not necessary to display the content list screen 200 on the body side either when causing the external playback apparatus to play back media data.

While the example of connecting the television set 3 and the television set 5 to the portable information processing device 1 as the external playback apparatuses has been described in the aforementioned embodiment, the present invention is not restricted to this. According to the present invention, the portable information processing device may be connected with an external playback apparatus other than television sets. For example, the portable information processing device may be connected with an external playback apparatus such as an audio apparatus performing only playback of media data (music data, for example) of only a sound. The external playback apparatus may be any apparatus, so far as the same is capable of playing back media data (at least sound data).

While the example of forming the portable information processing device so that the user specifies the playback destination (DMR or HDMI) from the playback selection region 251 by selecting the playback destination selection portion (Play to) 250 on the content list screen 200 or selects body playback by double-tapping any content 210 has been described in the aforementioned embodiment, the present invention is not restricted to this. According to the present invention, the user may select the playback destination of media data by any selection method other than the above.

While the example of forming the CPU 21 to switch the control object for the playback volume in a prescribed case at the time of HDMI connection and also at the time of cancellation of the HDMI connection has been shown in the aforementioned embodiment, the present invention is not restricted to this. The CPU 21 may not switch the control object for the playback volume at the time of connection with the external playback apparatus and at the time of cancellation of the connection.

While the example of connecting the two external playback apparatuses (the television set 3 and the television set 5) to the portable information processing, device 1 has been shown in the aforementioned embodiment, the present invention is not restricted to this. According to the present invention, one external playback apparatus may simply be connected with the portable information processing device, or at least three external playback apparatuses may be connected with the portable information processing device.

While the example of providing the mechanical volume control button 20 dedicated to volume control on the housing 1a of the portable information processing device 1 as an example of the volume control operation portion of the present invention has been shown in the aforementioned embodiment, the present invention is not restricted to this. According to the present invention, the portable information processing device may be formed to display a common volume control operation portion on the content list screen 200, for example, for accepting a volume control operation by a touch operation of the user.

While the example of forming the CPU 21 to set the volume control object by the volume control button 20 on the basis of the operation of specifying the playback destination (DMR or HDMI) from the playback destination selection selection region 251 by the user or the HDMI connection operation by the user during playback according to the DMP mode has been shown in the aforementioned embodiment, the present invention is not restricted to this. The portable information processing device may be formed, in a case where a connection operation of an earphone or the like is performed on the voice cable connection portion 13 of the portable information processing device 1 by the user in a state during playback (the DMC mode or the pseudo DMC mode) by an external playback apparatus, for example, to mute (muffle) the volume on the external playback apparatus side and to set the volume control object by the volume control button 20 to the voice cable connection portion 13 (volume control portion 17) side.

While the example of providing the wireless LAN connection portion 12 and the HDMI connection portion 15 as examples of the external playback apparatus connection portion of the present invention has been shown in the aforementioned embodiment, the present invention is not restricted to this. For example, an external playback apparatus may be connected to the USB connection portion 16 as the external playback apparatus connection portion of the present invention. The external playback apparatus connection portion of the present invention may be any connection portion, so far as the same can be connected with an external playback apparatus capable of playing back media data.

While the example of constituting the volume control button 20 of a seesaw button type operation portion consisting of the two press portions 20a and 20b has been shown in the aforementioned embodiment, the present invention is not restricted to this. According to the present invention, the volume control button 20 may be a rotary type operation portion or the like other than the seesaw button type one.

While the processing operations of the control portion have been described by employing the flow charts described in an event-driven manner in starting and described in a flow-driven manner as to processing operations after the starting for the convenience of illustration in the aforementioned embodiment, the present invention is not restricted to this, but the processing operations of the control operation may be performed in a complete event-driven manner, in a complete flow-driven manner, or in a parallel processing manner.

While the example of transmitting the control signal (volume control command) to the DLNA external playback apparatus (television set 3) by performing wireless network communication based on the DLNA standard allowing sharing of media data between network-connected corresponding apparatuses has been shown in the aforementioned embodiment, the present invention is not restricted to this. According to the present invention, the CPU may transmit a control signal (volume control command) to an external playback apparatus by wired or wireless network communication other than the wireless network communication based on the DLNA standard. Further, the CPU may transmit a control signal (volume control command) by another communication other than the network communication.

While the example of transmitting the control signal (volume control command) to the external playback apparatus (television set 5) connected by HDMI connection capable of performing a cooperative operation between apparatuses by connecting two apparatuses with each other by an HDMI cable capable of transmitting sound data, picture data and a control signal has been shown in the aforementioned embodiment, the present invention is not restricted to this. According to the present invention, the portable information processing device may be connected with an external playback apparatus by a cable based on another interface standard other than the HDMI standard, capable of transmitting sound data, picture data and a control signal between two apparatuses, thereby transmitting a control signal (volume control command) to the external playback apparatus.

## Claims

1. A portable information display terminal comprising:
a display portion displaying information;
a housing provided with said display portion on a surface thereof;
a state detection sensor to detect at least a use state of said housing and said display portion by sensing an inclination of said housing;
an imaging portion capable of imaging a user's face; and
a control portion detecting an orientation of the face with a face detection function on the basis of data of the user's face imaged by said imaging portion and performing control of switching an orientation of a screen display of said display portion on the basis of a result of detection of the orientation of the face and a result of detection by said state detection sensor.

2. The portable information display terminal according to claim 1, wherein
said control portion is configured to prioritize said result of detection of the orientation of the user's face over the use state detected by said state detection sensor and switch the orientation of the screen display to one corresponding to the orientation of the user's face in a case where said state detection sensor detects a prescribed use state.

3. The portable information display terminal according to claim 2, wherein
said prescribed use state is a use state where the user uses the portable information display terminal while grasping said housing with his/her hand, and
said control portion is configured to prioritize said result of detection of the orientation of the user's face over the use state detected by said state detection sensor and switch the orientation of the screen display to one corresponding to the orientation of the user's face in a case where said use state where the user uses the portable information display terminal while grasping said housing with his/her hand is detected.

4. The portable information display terminal according to claim 3, wherein
said control portion is configured to perform control of switching the orientation of the screen display of said display portion on the basis of said result of detection by said state detection sensor in a case where said state detection sensor detects that the portable information display terminal is not in said use state where the user uses the portable information display terminal while grasping said housing with his/her hand.

5. The portable information display terminal according to any one of claims 2 to 4, wherein
said state detection sensor is provided to detect which use state of a first use state where the user uses the portable information display terminal while standing said housing and said display portion on a placing surface, a second use state where the user uses the portable information display terminal while laying down said housing and said display portion on the placing surface, and a third use state where the user uses the portable information display terminal while grasping said housing with his/her hand as said prescribed use state the portable information display terminal is in by sensing the inclination of said housing, and
said control portion is configured to perform control of prioritizing said result of detection of the orientation of the user's face and switching the orientation of the screen display to one corresponding to the orientation of the user's face in a case where said state detection sensor detects that the portable information display terminal is at least in said third use state, and to perform control of switching the orientation of the screen display of said display portion on the basis of said result of detection by said state detection sensor in a case where said state detection sensor detects that the portable information display terminal is in said first use state or said second use state.

6. The portable information display terminal according to any one of claims 2 to 5, wherein
said state detection sensor is configured to detect at least an unused state turning down the portable information display terminal so that said display portion is opposed to a placing surface in addition to said prescribed use state, and
said control portion is configured to perform control of shifting to a standby mode without using said face detection function in a case where said state detection sensor detects that the portable information display terminal is not in said prescribed use state where said housing is grasped by the user and detects an inclination of said housing in said unused state turning down the portable information display terminal so that said display portion is opposed to the placing surface, and to perform control of not shifting to said standby mode but displaying a screen display based on said result of detection of the orientation of the user's face on said display portion in a case where said state detection sensor detects that the portable information display terminal is in said prescribed use state where said housing is grasped by the user and detects the inclination of said housing in said unused state turning down the portable information display terminal so that said display portion is opposed to the placing surface.

7. The portable information display terminal according to any one of claims 2 to 6, wherein
said state detection sensor is provided to detect which use state of a first use state where the user uses the portable information display terminal while standing at least said housing and said display portion on a placing surface, a second use state where the user uses the portable information display terminal while laying down said housing and said display portion on the placing surface, and a third use state where the user uses the portable information display terminal while grasping said housing with his/her hand as said prescribed use state the portable information display terminal is in by sensing the inclination of said housing, and
said housing is configured to have an outer shape settable on the placing surface so that a first inclination of said housing in said first use state and a second inclination of said housing in said second use state become inclinations different from each other.

8. The portable information display terminal according to any one of claims 1 to 7, wherein
said control portion is configured to maintain the orientation of the screen display of said display portion unswitched if determining that an inclination value detected this time by said state detection sensor falls within a prescribed angular range from an inclination value previously detected by said state detection sensor in a case where the orientation of the user's face cannot be detected from the data of the user's face imaged by said imaging portion when said state detection sensor detects a use state where the user uses the portable information display terminal while grasping said housing with his/her hand.

9. The portable information display terminal according to claim 8, wherein
said control portion is configured to detect the orientation of the user's face again with said face detection function if it is detected that the inclination value detected this time by said state detection sensor has been changed over the prescribed angular range from the inclination value previously detected by said state detection sensor in the case where the orientation of the user's face cannot be detected from the data of the user's face imaged by said imaging portion.

10. The portable information display terminal according to any one of claims 1 to 9, wherein
said state detection sensor includes an inclination sensor.

## Amended claims

### Amended claims under Art. 19.1 PCT

**1.** A portable information processing device (1) comprising:
a built-in playback portion (13, 19) capable of playing back media data;
an external playback apparatus connection portion (12, 15) connectable with an external playback apparatus (3, 5) capable of playing back media data;
a control portion (21), controlling playback on said built-in playback portion, capable of acquiring media data; and
a volume control operation portion (20) employed in common at times of volume control of media data played back on said built-in playback portion and said external playback apparatus, wherein
said control portion is formed to switch an object of volume control to a playback volume of said external playback apparatus and to control a playback volume of media data played back on said external playback apparatus without performing volume control of said built-in playback portion on the basis of a control operation for said volume control operation portion by a user at least in a case where playback by said built-in playback portion is not performed but playback by said external playback apparatus is performed.

**2.** The portable information processing device according to claim 1, wherein
said control portion is formed to switch the object of volume control to the playback volume of said external playback apparatus serving as a playback destination at least on the basis of an operation of specifying the playback destination of media data to said external playback apparatus by the user.

**3.** The portable information processing device according to claim 2, wherein
said control portion is formed to switch the object of volume control to the playback volume of said external playback apparatus serving as the playback destination on the basis of an operation of specifying the playback destination of the media data and an operation of performing playback by the user.

**4.** The portable information processing device according to claim 1, wherein
said control portion is formed to switch the object of volume control to the playback volume of said built-in playback portion serving as a playback destination in a case where media data is played back by said built-in playback portion.

**5.** The portable information processing device according to claim 1, wherein
said control portion is formed to determine whether or not said external playback apparatus is connected to said external playback apparatus) connection portion and to switch a playback destination of media data to said external playback apparatus while switching the object of volume control to a playback volume of said external playback apparatus in a case where a connection operation of said external playback apparatus is performed on said external playback apparatus connection portion by the user during playback of media data by said built-in playback portion.

**6.** The portable information processing device according to claim 5, wherein
said control portion is formed to switch the playback destination of media data to said built-in playback portion and to switch the object of volume control to the playback volume of said built-in playback portion in a case where the connection of said external playback apparatus to said external playback apparatus connection portion is canceled during playback of the media data by said external playback apparatus.

**7.** The portable information processing device according to claim 1, wherein
said control portion is formed to switch the object of volume control from a playback volume of said external playback apparatus having performed playback to a playback volume of said built-in playback portion in a case where playback of media data by said external playback apparatus terminates.

**8.** The portable information processing device according to claim 1, further comprising a housing (1a), wherein
said volume control operation portion is a mechanical operation portion, dedicated to volume control, set on a prescribed portion of said housing.

**9.** The portable information processing device according to claim 8, wherein
said housing includes a grasp portion (1b) employed by the user for grasping and using said portable information processing device, and
said volume control operation portion is set on a prescribed portion on a back surface side of said housing operable by the user in a state grasping said grasp portion.

**10.** The portable information processing device according to claim 1, wherein
said control portion is formed to regard a playback volume of one said external playback apparatus specified as a playback destination of media data as the object of volume control at least on the basis of an operation of specifying the playback destination of media data to said one external playback apparatus by the user in a case where a plurality of said external playback apparatuses are connected to said external playback apparatus connection portion.

**11.** The portable information processing device according to claim 1, wherein
said control portion is formed to control a playback volume of media data by said external playback apparatus by performing gain control of a volume control portion (3a, 5a) of said external playback apparatus in a case of regarding the playback volume of said external playback apparatus as the object of volume control.

**12.** The portable information processing device according to claim 11, wherein
said control portion is formed to perform the gain control of the volume control portion of said external playback apparatus by transmitting a volume control command for performing gain control to said external playback apparatus.

**13.** The portable information processing device according to claim 12, wherein
said volume control command for performing the gain control includes a control signal by network communication based on a prescribed network standard with respect to said external playback apparatus corresponding to said prescribed network standard allowing sharing of media data between network-connected apparatuses, or a control signal with respect to said external playback apparatus connected by a prescribed interface standard capable of performing a cooperative operation between apparatuses by connecting two apparatuses with each other by a prescribed cable capable of transmitting sound data, picture data and the control signal.

**14.** The portable information processing device according to claim 12, further comprising an infrared communication portion (18), wherein
said volume control command for performing t gain control includes an infrared signal for remote control with respect to said external playback apparatus.

**15.** The portable information processing device according to claim 11, wherein
said control portion is formed to control the playback volume of media data by said external playback apparatus by changing the volume of the media data itself played back by said external playback apparatus in a case of regarding the playback volume of said external playback apparatus as the object of volume control and a case where the gain control of the volume control portion of said external playback apparatus cannot be performed.

**16.** The portable information processing device according to claim 1, further comprising a display portion (10), wherein
said control portion is formed to selectively display a utilizable playback destination connected to said external playback apparatus connection portion on said display portion.

**17.** The portable information processing device according to claim 16, wherein
said display portion is formed to be capable of accepting an operation input by the user on a display screen, and
said control portion is formed to accept both of an instruction specifying the playback destination of media data and a playback instruction for media data on the basis of a single operation by the user on the display screen of said display portion.
